# EUROPEAN PATENT APPLICATION

(11) **EP 4 465 173 A1**
(43) Date of publication of application: **20.11.2024**
(21) Application number: 22920706.3
(22) Date of filing: 13.01.2022
(51) Int. Cl.: G06F 9/455, G06F 9/451, B60R 16/023

(54) **SIGNAL PROCESSING DEVICE AND VEHICLE DISPLAY DEVICE HAVING SAME**

(71) Applicant: LG Electronics Inc., Yeongdeungpo-gu Seoul 07336 (KR)
(72) Inventor: KIM, Minhyoung, Seoul 06772 (KR); HAN, Dongwoo, Seoul 06772 (KR)
(74) Representative: Vossius & Partner Patentanwälte Rechtsanwälte mbB
(86) International application number: PCT/KR2022/000619
(87) International publication number: WO 2023/136373

(57) **Abstract**

A signal processing device and a display apparatus for vehicle including the same are disclosed. The signal processing device comprises a processor to perform signal processing for a display, wherein the processor is configured to execute a plurality of virtual machines on a hypervisor in the processor, and a first and a second virtual machine share an mutual sharing area for a remote procedure call in a shared memory of the hypervisor, wherein the first virtual machine is configured to execute a callee for receiving data in response to a caller of the second virtual machine, and a first call interface for access to the mutual sharing area, and the second virtual machine is configured to execute a caller for the remote procedure call and a second call interface for access to the mutual sharing area. Accordingly, resources may be used efficiently among the plurality of virtual machines.

## Description

### BACKGROUND

### 1. Technical Field

The present disclosure relates to a signal processing device and a display apparatus for vehicle including the same, and more particularly to a signal processing device capable of enabling efficient use of resources among a plurality of virtual machines, and a display apparatus for vehicle including the signal processing device.

### 2. Description of the Related Art

A vehicle is an apparatus that a driver moves in a desired direction. A representative example of the vehicle is a car.

Meanwhile, a display apparatus for vehicle is located in the vehicle for convenience of users who use the vehicle.

For example, a display is disposed in a cluster in order to display various kinds of information. Meanwhile, in order to display vehicle driving information, various displays, such as an audio video navigation (AVN) display, are located in the vehicle, in addition to the cluster.

In the case in which the number of displays in the display apparatus for vehicle is increased, however, signal processing for the displays is complicated.

For this reason, research is conducted on the display apparatus for vehicle to provide integrated user experience by using a plurality of virtual machines.

Meanwhile, Remote Procedure Call (RPC) based on a network communication is used among the plurality of virtual machines to use services.

However, the Remote Procedure Call has problems in that processor usage increases, and a response delay occurs due to use of a network for other purposes. Further, there is also a drawback in that the Remote Procedure Call cannot be used at the initial booting of a system before a network is activated.

Meanwhile, U.S. Patent No. US7941800 (hereinafter referred to as a related art) discloses data transmission between virtual machines via a virtual machine bus operating in pipe mode.

However, the related art has a drawback in that even using the pipe mode may not enable efficient use of system resources and may not allow for rapid interaction.

### SUMMARY

It is an objective of the present disclosure to provide a signal processing device capable of enabling efficient use of resources among a plurality of virtual machines, and a display apparatus for vehicle including the signal processing device.

It is another objective of the present disclosure to provide a signal processing device capable of reducing a call and response delay time during a remote procedure call among a plurality of virtual machines, and a display apparatus for vehicle including the signal processing device.

It is yet another objective of the present disclosure to provide a signal processing device capable of combining data sharing and remote procedure call, and a display apparatus for vehicle including the signal processing device.

Meanwhile, it is further another objective of the present disclosure to provide a signal processing device capable of enabling rapid interaction between virtual machines even when the number of virtual machines increases, and a display apparatus for vehicle including the signal processing device.

In accordance with an aspect of the present disclosure, the above and other objectives can be accomplished by providing a signal processing device and a display apparatus for vehicle including the same, the signal processing device including a processor configured to perform signal processing for a display located in a vehicle, wherein the processor is configured to execute a plurality of virtual machines on a hypervisor in the processor, and a first virtual machine and a second virtual machine among the plurality of virtual machines share an mutual sharing area for a remote procedure call in a shared memory of the hypervisor, wherein the first virtual machine is configured to execute a callee, which receives data in response to a caller of the second virtual machine, and a first call interface for access to the mutual sharing area, and the second virtual machine is configured to execute a caller for the remote procedure call and a second call interface for access to the mutual sharing area.

Meanwhile, the second virtual machine may write call-related information to the mutual sharing area and may notify the information to the first virtual machine, wherein the first virtual machine may receive data in the mutual sharing area.

Meanwhile, the first virtual machine may write result data, processed based on the received data, to the mutual sharing area, and may notify the result data to the second virtual machine, wherein the second virtual machine may receive the result data written to the mutual sharing area.

Meanwhile, the first virtual machine or the second virtual machine may store data, having a size exceeding a capacity of the mutual sharing area, in a separate area of the shared memory.

Meanwhile, in response to parameter data transmitted from the caller, the second call interface may copy the parameter data and meta data to the mutual sharing area; and in response to a pointer parameter, the second call interface may transmit data, corresponding to the pointer, to a call storage area in the shared memory.

Meanwhile, the first call interface or the second call interface may generate or manage a control page in the shared memory or may generate or manage the mutual sharing area.

Meanwhile, the first call interface or the second call interface may generate or delete a remote procedure call channel including the mutual sharing area and the call storage area.

Meanwhile, the first call interface or the second call interface may interact with a host driver external to the shared memory via a control page table and a control page in the shared memory, to generate or delete the remote procedure call channel including the mutual sharing area and the call storage area.

Meanwhile, the first call interface or the second call interface may generate or delete the control page via the host driver.

Meanwhile, the first call interface or the second call interface may generate control pages in a number corresponding to a number of providers of services related to the Remote Procedure Call.

Meanwhile, the first call interface or the second call interface may generate remote procedure call channels in a number corresponding to the number of providers of services related to the Remote Procedure Call.

Meanwhile, the first call interface or the second call interface may store data, having a size exceeding the mutual sharing area, in the call storage area, and may write an address of the call storage area to the mutual sharing area.

Meanwhile, the first call interface or the second call interface may store data, having a size exceeding the mutual sharing area, in the call storage area, and may write an address of the call storage area to the mutual sharing area.

Meanwhile, in response to screen capture data, the first call interface may store the screen capture data in the call storage area, and may write an address of the call storage area to the mutual sharing area.

Meanwhile, the first virtual machine may receive data about the control page table in the shared memory, and may register a first remote procedure call service based on the received data about the control page table.

Meanwhile, the second virtual machine may request the shared memory to generate a remote procedure call channel, including the mutual sharing area and the call storage area, in the shared memory, and may receive information about the generated remote procedure call channel.

Meanwhile, the first virtual machine may transmit data to the second virtual machine after booting by using the mutual sharing area.

Meanwhile, the first virtual machine may repeatedly receive sensing data, and may transmit the sensing data to the second virtual machine by using the mutual sharing area.

Meanwhile, the second virtual machine may operate for a first display; the processor may further execute a third virtual machine for a second display; and the second virtual machine may transmit a request for music playback information to the third virtual machine by using a second mutual sharing area in the shared memory, may receive music playback information written to the second mutual sharing area, and may display the music playback information on the first display.

Meanwhile, the second virtual machine may operate for a first display; the processor may further execute a third virtual machine for a second display; and the second virtual machine may transmit a request for screen theme information to the third virtual machine by using a second mutual sharing area in the shared memory, may receive screen theme information written to the second mutual sharing area, and may display the screen theme information on the first display.

### EFFECTS OF THE DISCLOSURE

A signal processing device according to an embodiment of the present disclosure and a display apparatus for vehicle including the same include a processor configured to perform signal processing for a display located in a vehicle, wherein the processor is configured to execute a plurality of virtual machines on a hypervisor in the processor, and a first virtual machine and a second virtual machine among the plurality of virtual machines share an mutual sharing area for a remote procedure call in a shared memory of the hypervisor, wherein the first virtual machine is configured to execute a callee, which receives data in response to a caller of the second virtual machine, and a first call interface for access to the mutual sharing area, and the second virtual machine is configured to execute a caller for the remote procedure call and a second call interface for access to the mutual sharing area. Accordingly, resources may be used efficiently among the plurality of virtual machines. Particularly, a call and response delay time may be reduced during the remote procedure call among the plurality of virtual machines. In addition, data sharing and remote procedure call may be integrated.

Meanwhile, the second virtual machine may write call-related information to the mutual sharing area and may notify the information to the first virtual machine, wherein the first virtual machine may receive data in the mutual sharing area. Accordingly, resources may be used efficiently among the plurality of virtual machines. Particularly, a call and response delay time may be reduced during the remote procedure call among the plurality of virtual machines.

Meanwhile, the first virtual machine may write result data, processed based on the received data, to the mutual sharing area, and may notify the result data to the second virtual machine, wherein the second virtual machine may receive the result data written to the mutual sharing area. Accordingly, resources may be used efficiently among the plurality of virtual machines. Particularly, a call and response delay time may be reduced during the remote procedure call among the plurality of virtual machines.

Meanwhile, the first virtual machine or the second virtual machine may store data, having a size exceeding a capacity of the mutual sharing area, in a separate area of the shared memory. Accordingly, resources may be used efficiently among the plurality of virtual machines. Particularly, a call and response delay time may be reduced during the remote procedure call among the plurality of virtual machines.

Meanwhile, in response to parameter data transmitted from the caller, the second call interface may copy the parameter data and meta data to the mutual sharing area; and in response to a pointer parameter, the second call interface may transmit data, corresponding to the pointer, to a call storage area in the shared memory. Accordingly, resources may be used efficiently among the plurality of virtual machines. Particularly, a call and response delay time may be reduced during the remote procedure call among the plurality of virtual machines.

Meanwhile, the first call interface or the second call interface may generate or manage a control page in the shared memory or may generate or manage the mutual sharing area. Accordingly, resources may be used efficiently among the plurality of virtual machines. Particularly, a call and response delay time may be reduced during the remote procedure call among the plurality of virtual machines.

Meanwhile, the first call interface or the second call interface may generate or delete a remote procedure call channel including the mutual sharing area and the call storage area. Accordingly, resources may be used efficiently among the plurality of virtual machines. Particularly, a call and response delay time may be reduced during the remote procedure call among the plurality of virtual machines.

Meanwhile, the first call interface or the second call interface may interact with a host driver external to the shared memory via a control page table and a control page in the shared memory, to generate or delete the remote procedure call channel including the mutual sharing area and the call storage area. Accordingly, resources may be used efficiently among the plurality of virtual machines. Particularly, a call and response delay time may be reduced during the remote procedure call among the plurality of virtual machines.

Meanwhile, the first call interface or the second call interface may generate or delete the control page via the host driver. Accordingly, resources may be used efficiently among the plurality of virtual machines. Particularly, a call and response delay time may be reduced during the remote procedure call among the plurality of virtual machines.

Meanwhile, the first call interface or the second call interface may generate control pages in a number corresponding to a number of providers of services related to the Remote Procedure Call. Accordingly, resources may be used efficiently among the plurality of virtual machines. Particularly, a call and response delay time may be reduced during the remote procedure call among the plurality of virtual machines.

Meanwhile, the first call interface or the second call interface may generate remote procedure call channels in a number corresponding to the number of providers of services related to the Remote Procedure Call. Accordingly, resources may be used efficiently among the plurality of virtual machines. Particularly, a call and response delay time may be reduced during the remote procedure call among the plurality of virtual machines.

Meanwhile, the first call interface or the second call interface may store data, having a size exceeding the mutual sharing area, in the call storage area, and may write an address of the call storage area to the mutual sharing area. Accordingly, resources may be used efficiently among the plurality of virtual machines. Particularly, a call and response delay time may be reduced during the remote procedure call among the plurality of virtual machines.

Meanwhile, the first call interface or the second call interface may store data, having a size exceeding the mutual sharing area, in the call storage area, and may write an address of the call storage area to the mutual sharing area. Accordingly, resources may be used efficiently among the plurality of virtual machines. Particularly, a call and response delay time may be reduced during the remote procedure call among the plurality of virtual machines.

Meanwhile, in response to screen capture data, the first call interface may store the screen capture data in the call storage area, and may write an address of the call storage area to the mutual sharing area. Accordingly, resources may be used efficiently among the plurality of virtual machines. Particularly, a call and response delay time may be reduced during the remote procedure call among the plurality of virtual machines.

Meanwhile, the first virtual machine may receive data about the control page table in the shared memory, and may register a first remote procedure call service based on the received data about the control page table. Accordingly, resources may be used efficiently among the plurality of virtual machines. Particularly, a call and response delay time may be reduced during the remote procedure call among the plurality of virtual machines.

Meanwhile, the second virtual machine may request the shared memory to generate a remote procedure call channel, including the mutual sharing area and the call storage area, in the shared memory, and may receive information about the generated remote procedure call channel. Accordingly, resources may be used efficiently among the plurality of virtual machines. Particularly, a call and response delay time may be reduced during the remote procedure call among the plurality of virtual machines.

Meanwhile, the first virtual machine may transmit data to the second virtual machine after booting by using the mutual sharing area. Accordingly, resources may be used efficiently among the plurality of virtual machines. Particularly, a call and response delay time may be reduced during the remote procedure call among the plurality of virtual machines.

Meanwhile, the first virtual machine may repeatedly receive sensing data, and may transmit the sensing data to the second virtual machine by using the mutual sharing area. Accordingly, resources may be used efficiently among the plurality of virtual machines. Particularly, resources may be used efficiently during transmission of the sensing data among the plurality of virtual machines.

Meanwhile, the second virtual machine may operate for a first display; the processor may further execute a third virtual machine for a second display; and the second virtual machine may transmit a request for music playback information to the third virtual machine by using a second mutual sharing area in the shared memory, may receive music playback information written to the second mutual sharing area, and may display the music playback information on the first display. Accordingly, resources may be used efficiently among the plurality of virtual machines. Particularly, resources may be used efficiently during transmission of the music playback information among the plurality of virtual machines. Further, even when the number of virtual machines increases, rapid interaction between the virtual machines may be achieved.

Meanwhile, the second virtual machine may operate for a first display; the processor may further execute a third virtual machine for a second display; and the second virtual machine may transmit a request for screen theme information to the third virtual machine by using a second mutual sharing area in the shared memory, may receive screen theme information written to the second mutual sharing area, and may display the screen theme information on the first display. Accordingly, resources may be used efficiently among the plurality of virtual machines. Particularly, resources may be used efficiently during transmission of the screen theme information among the plurality of virtual machines.

### BRIEF DESCRIPTION OF THE DRAWINGS

FIG. 1A is a view showing an example of the exterior and interior of a vehicle;
FIG. 1B is a view showing another example of the interior of the vehicle;
FIG. 2 is a view showing the external appearance of a display apparatus for vehicle according to an embodiment of the present disclosure;
FIG. 3 illustrates an example of an internal block diagram of the display apparatus for vehicle of FIG. 2;
FIG. 4 is a view showing a system driven in a signal processing device related to the present disclosure;
FIG. 5 is a view showing an example of a system driven in a signal processing device according to an embodiment of the present disclosure;
FIG. 6 is a view showing another example of the system driven in the signal processing device according to the embodiment of the present disclosure;
FIG. 7 is a view showing a further example of the system driven in the signal processing device according to the embodiment of the present disclosure;
FIGS. 8 to 9B are views referred to in the description of FIG. 5;
FIGS. 10A and 10B are diagrams illustrating a signal processing device related to the present disclosure;
FIG. 11 is a diagram explaining internal operation of a signal processing device according to an embodiment of the present disclosure; and
FIGS. 12 to 16D are diagrams referred to in the description of FIG. 11.

### DETAILED DESCRIPTION

Hereinafter, the present disclosure will be described in detail with reference to the accompanying drawings.

With respect to constituent elements used in the following description, suffixes "module" and "unit" are given only in consideration of ease in preparation of the specification, and do not have or serve different meanings. Accordingly, the suffixes "module" and "unit" may be used interchangeably.

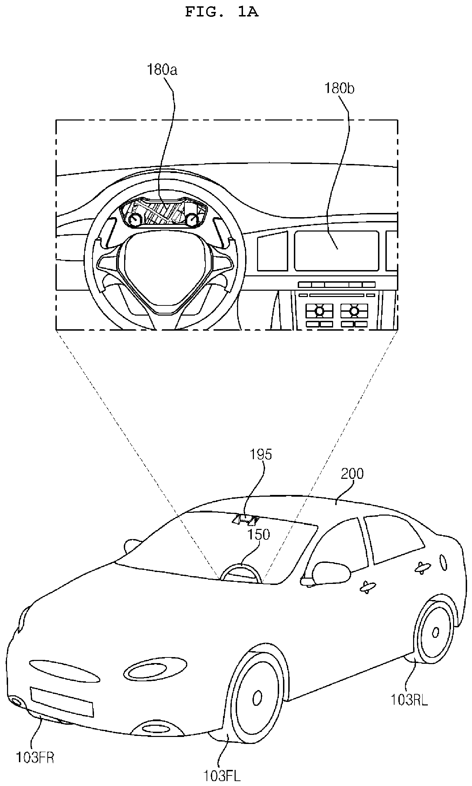

FIG. 1A is a view showing an example of the exterior and interior of a vehicle.

Referring to the figure, the vehicle 200 is moved by a plurality of wheels 103FR, 103FL, 103RL,... rotated by a power source and a steering wheel 150 configured to adjust an advancing direction of the vehicle 200.

Meanwhile, the vehicle 200 may be provided with a camera 195 configured to acquire an image of the front of the vehicle.

Meanwhile, the vehicle 200 may be further provided therein with a plurality of displays 180a and 180b configured to display images and information.

In FIG. 1A, a cluster display 180a and an audio video navigation (AVN) display 180b are illustrated as the plurality of displays 180a and 180b. In addition, a head up display (HUD) may also be used.

Meanwhile, the audio video navigation (AVN) display 180b may also be called a center information display.

Meanwhile, the vehicle 200 described in this specification may be a concept including all of a vehicle having an engine as a power source, a hybrid vehicle having an engine and an electric motor as a power source, and an electric vehicle having an electric motor as a power source.

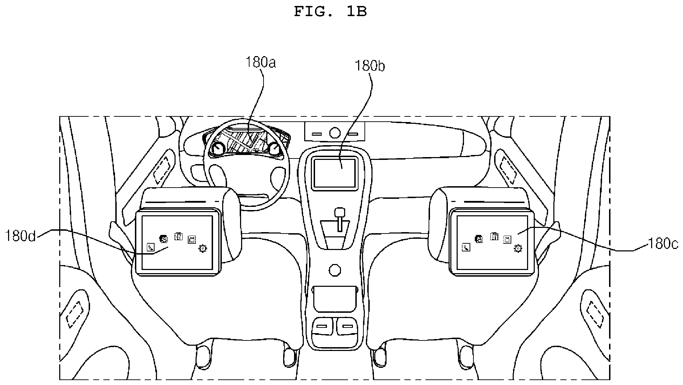

FIG. 1B is a view showing another example of the interior of the vehicle.

Referring to the figure, a cluster display 180a, an audio video navigation (AVN) display 180b, rear seat entertainment displays 180c and 180d, and a rear-view mirror display (not shown) may be located in the vehicle.

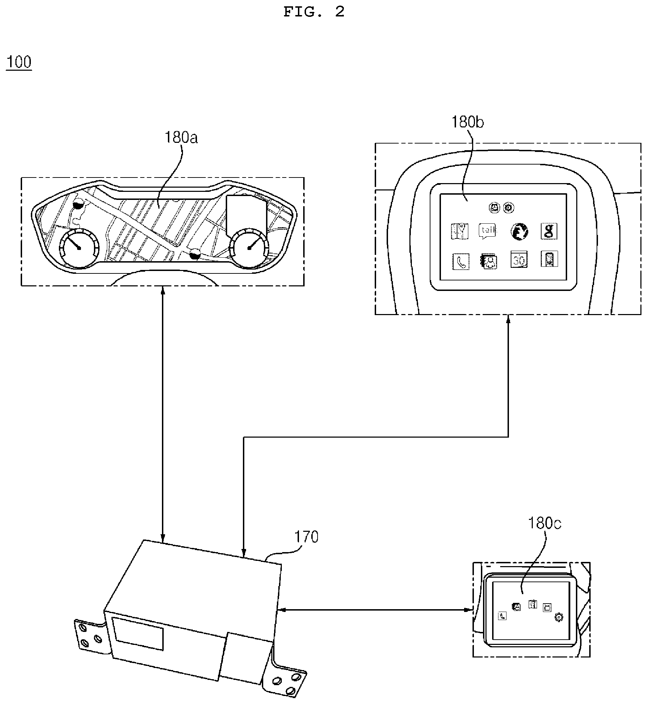

FIG. 2 is a view showing the external appearance of a display apparatus for vehicle according to an embodiment of the present disclosure.

The display apparatus 100 for vehicle according to the embodiment of the present disclosure may include a plurality of displays 180a and 180b and a signal processing device 170 configured to perform signal processing in order to display images and information on the plurality of displays 180a and 180b.

The first display 180a, which is one of the plurality of displays 180a and 180b, may be a cluster display 180a configured to display a driving state and operation information, and the second display 180b may be an audio video navigation (AVN) display 180b configured to display vehicle driving information, a navigation map, various kinds of entertainment information, or an image.

The signal processing device 170 may have a processor 175 provided therein, and first to third virtual machines 520 to 540 may be executed by a hypervisor 505 in the processor 175.

The second virtual machine 530 may be operated for the first display 180a, and the third virtual machine 540 may be operated for the second display 180b.

Meanwhile, the first virtual machine 520 in the processor 175 receives sensor data from a sensor device 760 in the vehicle 100 and a radio signal from a tuner 105 in the vehicle 100, and transmits data corresponding to the received sensor data or radio signal to at least one of the second virtual machine 530 or the third virtual machine 540. Accordingly, resources may be used efficiently among a plurality of virtual machines. Particularly, a call and response delay time among the plurality of virtual machines may be reduced. Further, the sensor data may be shared rapidly even though operating systems of the plurality of virtual machines are different from each other.

Meanwhile, the first virtual machine 520 in the processor 175 may be configured to set a shared memory 508 based on the hypervisor 505 for transmission of the same data to the second virtual machine 530 and the third virtual machine 540. Consequently, the first display 180a and the second display 180b in the vehicle may display the same information or the same images in a synchronized state.

Meanwhile, the first virtual machine 520 in the processor 175 shares at least some of data with the second virtual machine 530 and the third virtual machine 540 for divided processing of data. Consequently, the plurality of virtual machines for the plurality of displays in the vehicle may divide and process data.

Meanwhile, the first virtual machine 520 in the processor 175 may receive and process wheel speed sensor data of the vehicle, and may transmit the processed wheel speed sensor data to at least one of the second virtual machine 530 or the third virtual machine 540. Consequently, at least one virtual machine may share the wheel speed sensor data of the vehicle.

Meanwhile, the display apparatus 100 for vehicle according to the embodiment of the present disclosure may further include a rear seat entertainment (RSE) display 180c configured to display driving state information, simple navigation information, various kinds of entertainment information, or an image.

The signal processing device 170 may further execute a fourth virtual machine (not shown), in addition to the first to third virtual machines 520 to 540, on the hypervisor 505 in the processor 175 to control the RSE display 180c.

Consequently, it is possible to control various displays 180a to 180c using a single signal processing device 170.

Meanwhile, some of the plurality of displays 180a to 180c may be operated based on a Linux Operating System (OS), and others may be operated based on a Web Operating System (OS).

In response touch being input to any one of the displays 180a and 180b or 180a to 180c configured to be operated under various operating systems, the signal processing device 170 according to the embodiment of the present disclosure may be configured to rapidly and accurately process the touch input.

Meanwhile, FIG. 2 illustrates that a vehicle speed indicator 212a and an in-vehicle temperature indicator 213a are displayed on the first display 180a, a home screen 222 including a plurality of applications, a vehicle speed indicator 212b, and an in-vehicle temperature indicator 213b is displayed on the second display 180b, and a home screen 222b including a plurality of applications and an in-vehicle temperature indicator 213c is displayed on the third display 180c.

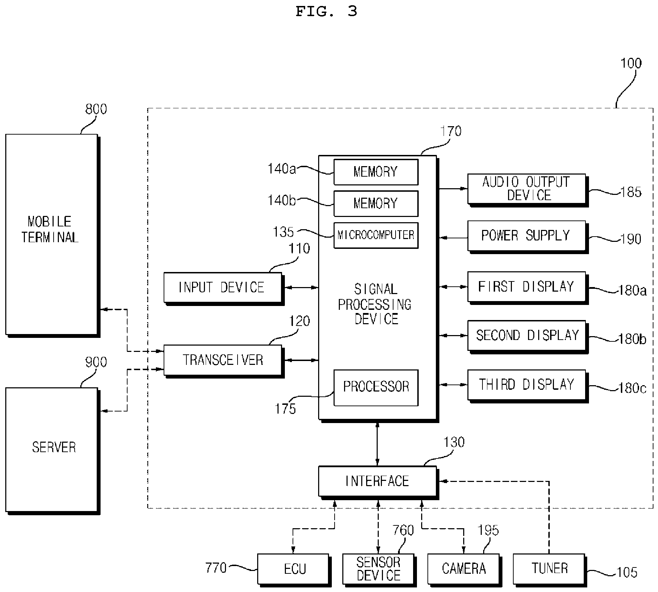

FIG. 3 illustrates an example of an internal block diagram of the display apparatus for vehicle according to the embodiment of the present disclosure.

Referring to the figure, the display apparatus 100 for vehicle according to the embodiment of the present disclosure may include an input device 110, a transceiver 120, an interface 130, a signal processing device 170, a plurality of displays 180a to 180c, an audio output device 185, and a power supply 190.

The input device 110 may include a physical button or pad for button input or touch input.

Meanwhile, the input device 110 may include a touch sensor (not shown) configured to sense touch input to the displays 180a, 180b, and 180c.

Meanwhile, the input device 110 may include a microphone (not shown) for user voice input.

The transceiver 120 may wirelessly exchange data with a mobile terminal 800 or a server 900.

In particular, the transceiver 120 may wirelessly exchange data with a mobile terminal of a vehicle driver. Any of various data communication schemes, such as Bluetooth, Wi-Fi, WIFI Direct, and APIX, may be used as a wireless data communication scheme.

The transceiver 120 may receive weather information and road traffic situation information, such as transport protocol expert group (TPEG) information, from the mobile terminal 800 or the server 900. To this end, the transceiver 120 may include a mobile communication module (not shown).

The interface 130 may receive sensor information from an electronic control unit (ECU) 770 or a sensor device 760, and may transmit the received information to the signal processing device 170.

Here, the sensor information may include at least one of vehicle direction information, vehicle position information (global positioning system (GPS) information), vehicle angle information, vehicle velocity information, vehicle acceleration information, vehicle inclination information, vehicle forward/backward movement information, battery information, fuel information, tire information, vehicle lamp information, in-vehicle temperature information, and in-vehicle humidity information.

The sensor information may be acquired from a heading sensor, a yaw sensor, a gyro sensor, a position sensor, a vehicle forward/backward movement sensor, a wheel sensor, a vehicle velocity sensor, a car body inclination sensor, a battery sensor, a fuel sensor, a tire sensor, a steering-wheel-rotation-based steering sensor, an in-vehicle temperature sensor, or an in-vehicle humidity sensor. Meanwhile, the position module may include a GPS module configured to receive GPS information.

Meanwhile, the interface 130 may receive front-of-vehicle image data, side-of-vehicle image data, rear-of-vehicle image data, and obstacle-around-vehicle distance information from a camera 195 or lidar (not shown), and may transmit the received information to the signal processing device 170.

The audio output device 185 may convert an electrical signal from the signal processing device 170 into an audio signal, and may output the audio signal. To this end, the audio output device 185 may include a speaker.

The power supply 190 may supply power necessary to operate components under control of the signal processing device 170. In particular, the power supply 190 may receive power from a battery in the vehicle.

The signal processing device 170 may control overall operation of each device in the display apparatus 100 for vehicle.

Meanwhile, the signal processing device 170 may be implemented in the form of a system on chip (SOC).

The signal processing device 170 may include a processor 175 configured to perform signal processing for the displays 180a, 180b, and 180c, a first memory 140a and a second memory 140b configured to store various data, and a microcomputer 135.

The first memory 140a, which is a nonvolatile memory, may store various data even in a standby mode or when power is off.

For example, the first memory 140a may store a file corresponding to a first application executed by any one of a plurality of virtual machines 510 to 550 based on entry into the standby mode.

As another example, the first memory 140a may store an operating system (OS).

Meanwhile, the first memory 140a may store various data for overall operation of the display apparatus 100 for vehicle, such as programs for processing or control of the signal processing device 170.

Meanwhile, the second memory 140b, which is a volatile memory, may erase various data in the standby mode or when power is off, and may temporarily store data in an active mode.

For example, the second memory 140b may load the file stored in the first memory 140a based on switching from the standby mode to the active mode.

As another example, the second memory 140b may load the operating system (OS) stored in the first memory 140a based on switching from the standby mode to the active mode.

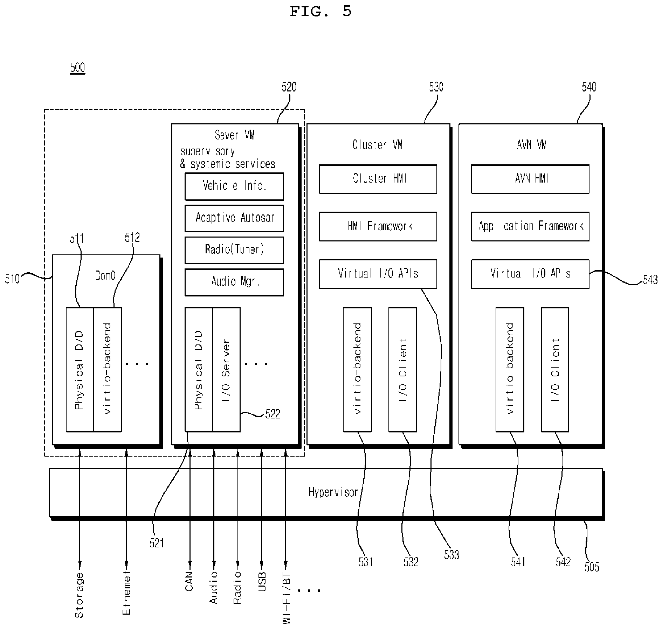

Meanwhile, the processor 175 may drive the hypervisor 505 (see FIG. 5).

Meanwhile, the processor 175 may execute the first to fourth virtual machines 520 to 550 on the hypervisor 505 (see FIG. 5) in the processor 175.

Meanwhile, the processor 175 may further execute a legacy virtual machine 510 configured to receive and process Ethernet data. For example, as shown in FIG. 5, the legacy virtual machine 510 may be executed by the first virtual machine 520 in the processor 175.

Among the first to fourth virtual machines 520 to 550 (see FIG. 5), the first virtual machine 520 may be called a server virtual machine, and the second to fourth virtual machines 530 to 550 may be called guest virtual machines.

The second virtual machine 530 may be operated for the first display 180a, the third virtual machine 540 may be operated for the second display 180b, and the fourth virtual machine 550 may be operated for the third display 180c.

For example, the first virtual machine 520 in the processor 175 may receive, process, and output vehicle sensor data, position information data, camera image data, audio data, or touch input data. Data processed only by a legacy virtual machine and data processed by the first virtual machine 520 may be distinguished from each other, whereby data processing may be efficiently performed. In particular, the first virtual machine 520 may process most of the data, whereby 1:N data sharing may be achieved.

As another example, the first virtual machine 520 may directly receive and process CAN communication data, audio data, radio data, USB data, and wireless communication data for the second to fourth virtual machines 530 to 550.

The first virtual machine 520 may transmit the processed data to the second to fourth virtual machines 530 to 550.

Consequently, only the first virtual machine 520, among the second to fourth virtual machines 530 to 550, may receive communication data and external input data, and may perform signal processing, whereby load in signal processing by the other virtual machines may be reduced and 1:N data communication may be achieved, and therefore synchronization at the time of data sharing may be achieved.

Meanwhile, the first virtual machine 520 writes some of data in a first shared memory (not shown) to be transmitted to the second virtual machine 530, and writes some other of data in the first shared memory (not shown) to be transmitted to the third virtual machine 540. The second virtual machine 530 and the third virtual machine 540 are configured to process the received data, and write the processed data in a second shared memory (not shown).

At this time, data may be any one of image data, audio data, navigation data, and voice recognition data.

Meanwhile, the first virtual machine 520 may process some other of data, and may be configured to write the processed data in the second shared memory (not shown). That is, the first virtual machine 520 may perform data processing in addition to the second virtual machine 530 and the third virtual machine 540.

Meanwhile, in response to a fourth virtual machine 550 configured to be operated for the third display 180c being executed in the processor 175, the first virtual machine 520 may write some other of data in the first shared memory (not shown), and the fourth virtual machine 550 may process the received data and may be configured to write the processed data in the second shared memory (not shown).

Meanwhile, the first virtual machine 520 may generate command queues for distributed processing of data in the second virtual machine 530 to the fourth virtual machine 550. Consequently, the plurality of virtual machines may divide and process data.

Meanwhile, in response to the second virtual machine 530 to the fourth virtual machine 550 sharing the same data, the first virtual machine 520 in the processor 175 may generate one command queue. Consequently, the same data may be synchronized and shared.

Meanwhile, the first virtual machine 520 may generate command queues corresponding to the number of virtual machines for distributed processing of data.

Meanwhile, the first virtual machine 520 may be configured to transmit at least some of data to at least one of the second virtual machine 530 to the fourth virtual machine 550 for distributed processing of data.

For example, the first virtual machine 520 may allocate the first shared memory (not shown) for transmitting at least some of data to at least one of the second virtual machine 530 to the fourth virtual machine 550, and image data processed by the second virtual machine 530 or the third virtual machine 540 may be written in the second shared memory (not shown).

Meanwhile, the first virtual machine 520 may be configured to write data in the shared memory 508, whereby the second virtual machine 530 to the fourth virtual machine 550 share the same data.

For example, the first virtual machine 520 may be configured to write radio data or wireless communication data in the shared memory 508, whereby the second virtual machine 530 to the fourth virtual machine 550 share the same data. Consequently, 1:N data sharing may be achieved.

Eventually, the first virtual machine 520 may process most of the data, whereby 1:N data sharing may be achieved.

Meanwhile, the first virtual machine 520 in the processor 175 may be configured to set the shared memory 508 based on the hypervisor 505 in order to transmit the same data to the second virtual machine 530 to the fourth virtual machine 550.

That is, the first virtual machine 520 in the processor 175 may transmit the same data to the second virtual machine 530 to the fourth virtual machine 550 in a synchronized state using the shared memory 508 based on the hypervisor 505. Consequently, the plurality of displays 180a to 180c in the vehicle may display the same images in a synchronized state.

Meanwhile, the signal processing device 170 may process various signals, such as an audio signal, an image signal, and a data signal.

Meanwhile, the first virtual machine 520 in the processor 175 may receive sensor data from the sensor device 760 in the vehicle 100 and a radio signal from the tuner 105 in the vehicle 100, and may transmit data corresponding to the sensor data or the radio signal to at least one of the second virtual machine 530 or the third virtual machine 540. Consequently, the data corresponding to the sensor data or the radio signal may be rapidly shared.

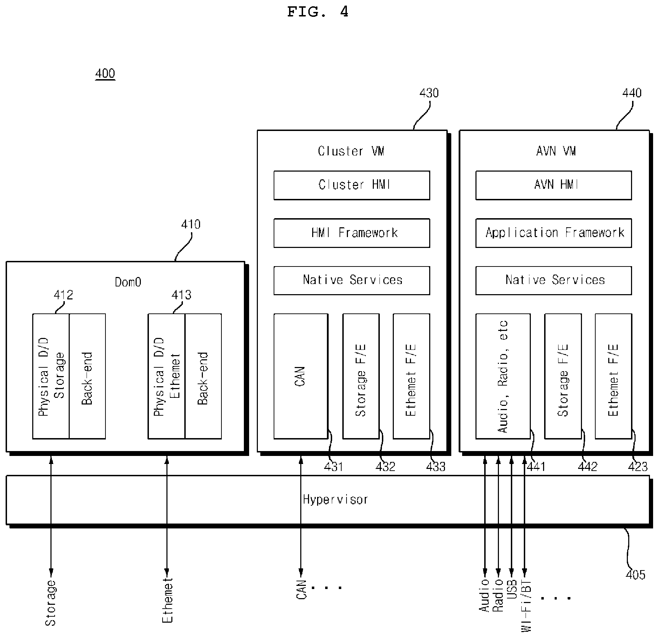

FIG. 4 is a view showing a system driven in a signal processing device related to the present disclosure.

Referring to the figure, FIG. 4 is a view illustrating that virtual machines are used for the cluster display 180a and the AVN display 180b.

The system 400 driven in the signal processing device of FIG. 4 illustrates that a cluster virtual machine 430 and an AVN virtual machine 440 are executed through a hypervisor 405 in the processor 175.

Meanwhile, the system 400 driven in the signal processing device of FIG. 4 illustrates that a legacy virtual machine 410 is also executed on the hypervisor 405 in the processor 175.

The legacy virtual machine 410 may include an interface 412 for data communication with the memory 140 and an interface 413 for Ethernet communication.

Meanwhile, the cluster virtual machine 430 may include an interface 431 for CAN communication, an interface 432 for communication with the interface 412 of the legacy virtual machine 410, and an interface 433 for communication with the interface 413 of the legacy virtual machine 410.

Meanwhile, the AVN virtual machine 440 may include an interface 441 for input and output of audio data, radio data, USB data, and wireless communication data, an interface 442 for communication with the interface 412 of the legacy virtual machine 410, and an interface 443 for communication with the interface 413 of the legacy virtual machine 410.

In the system 400, there is a disadvantage in that CAN communication data are input and output only in the cluster virtual machine 430, whereby the CAN communication data cannot be utilized in the AVN virtual machine 440.

Also, in the system 400 of FIG. 4, there is a disadvantage in that audio data, radio data, USB data, and wireless communication data are input and output only in the AVN virtual machine 440, whereby these data cannot be utilized in the cluster virtual machine 430.

Meanwhile, there is a disadvantage in that the cluster virtual machine 430 and the AVN virtual machine 440 must include the interfaces 431 and 432 and the interfaces 441 and 442, respectively, for memory data and Ethernet communication data input and output in the legacy virtual machine 410.

Therefore, the present disclosure proposes a scheme for improving the system of FIG. 4. That is, unlike FIG. 4, virtual machines are classified into a server virtual machine and guest virtual machines for inputting and outputting various memory data and communication data not in the guest virtual machines but in the server virtual machine. This will be described with reference to FIG. 5 and subsequent figures.

FIG. 5 is a view showing an example of a system driven in a signal processing device according to an embodiment of the present disclosure.

Referring to the figure, the system 500 of FIG. 5 illustrates that the first virtual machine 520, which is a server virtual machine, the second virtual machine 530, which is a guest virtual machine, and the third virtual machine 540, which is a guest virtual machine, are executed on the hypervisor 505 in the processor 175 of the signal processing device 170.

The second virtual machine 530 may be a virtual machine for the cluster display 180a, and the third virtual machine 540 may be a virtual machine for the AVN display 180b.

That is, the second virtual machine 530 and the third virtual machine 540 may be operated for image rendering of the cluster display 180a and the AVN display 180b, respectively.

Meanwhile, the system 50 driven in the signal processing device 170 of FIG. 5 illustrates that a legacy virtual machine 510 is also executed on the hypervisor 505 in the processor 175.

The legacy virtual machine 510 may include an interface 511 for data communication with the memory 140 and Ethernet communication.

The figure illustrates that the interface 511 is a physical device driver; however, various modifications are possible.

Meanwhile, the legacy virtual machine 510 may further include a virtio-backend interface 512 for data communication with the second and third virtual machines 530 and 540.

The first virtual machine 520 may include an interface 521 for input and output of audio data, radio data, USB data, and wireless communication data and an input and output server interface 522 for data communication with the guest virtual machines.

That is, the first virtual machine 520, which is a server virtual machine, may provide inputs/outputs (I/O) difficult to virtualize with standard virtualization technology (VirtIO) to a plurality of guest virtual machines, such as the second and third virtual machines 530 and 540.

Meanwhile, the first virtual machine 520, which is a server virtual machine, may control radio data and audio data at a supervisor level, and may provide the data to a plurality of guest virtual machines, such as the second and third virtual machines 530 and 540.

Meanwhile, the first virtual machine 520 may perform a supervisory service for system and display management and a system service for external device connection control and vehicle information management. Consequently, internal system management may be efficiently performed.

Meanwhile, the first virtual machine 520, which is a server virtual machine, may process vehicle data, sensor data, and surroundings-of-vehicle information, and may provide the processed data or information to a plurality of guest virtual machines, such as the second and third virtual machines 530 and 540.

Meanwhile, the first virtual machine 520 may provide supervisory services, such as processing of vehicle data and audio routing management.

Next, the second virtual machine 530 may include an input and output client interface 532 for data communication with the first virtual machine 520 and APIs 533 configured to control the input and output client interface 532.

In addition, the second virtual machine 530 may include a virtio-backend interface for data communication with the legacy virtual machine 510.

The second virtual machine 530 may receive memory data by communication with the memory 140 or Ethernet data by Ethernet communication from the virtio-backend interface 512 of the legacy virtual machine 510 through the virtio-backend interface.

Next, the third virtual machine 540 may include an input and output client interface 542 for data communication with the first virtual machine 520 and APIs 543 configured to control the input and output client interface 542.

In addition, the third virtual machine 540 may include a virtio-backend interface for data communication with the legacy virtual machine 510.

The third virtual machine 540 may receive memory data by communication with the memory 140 or Ethernet data by Ethernet communication from the virtio-backend interface 512 of the legacy virtual machine 510 through the virtio-backend interface.

Meanwhile, the legacy virtual machine 510 may be provided in the first virtual machine 520, unlike FIG. 5.

In the system 500, CAN communication data are input and output only in the first virtual machine 520, but may be provided to a plurality of guest virtual machines, such as the second and third virtual machines 530 and 540, through data processing in the first virtual machine 520. Consequently, 1:N data communication by processing of the first virtual machine 520 may be achieved.

Also, in the system 500 of FIG. 5, audio data, radio data, USB data, and wireless communication data are input and output only in the first virtual machine 520, but may be provided to a plurality of guest virtual machines, such as the second and third virtual machines 530 and 540, through data processing in the first virtual machine 520. Consequently, 1:N data communication by processing of the first virtual machine 520 may be achieved.

Also, in the system 500 of FIG. 5, touch input to the first display 180a or the second display 180b is input only to the first virtual machine 520 and is not input to the second virtual machine 530 and the third virtual machine 540. Information regarding the touch input is transmitted to the second virtual machine 530 or the third virtual machine 540.

Consequently, the touch input may be rapidly and accurately processed. In addition, the touch input may be rapidly and accurately processed even though the number of virtual machines that are driven is increased.

Meanwhile, in the system 500 of FIG. 5, the second and third virtual machines 530 and 540 may be operated based on different operating systems.

For example, the second virtual machine 530 may be operated based on a Linux OS, and the third virtual machine 540 may be operated based on a Web OS.

In the first virtual machine 520, the shared memory 508 based on the hypervisor 505 is set for data sharing, even though the second and third virtual machines 530 and 540 are operated based on different operating systems. Even though the second and third virtual machines 530 and 540 are operated based on different operating systems, therefore, the same data or the same images may be shared in a synchronized state. Eventually, the plurality of displays 180a and 180b may display the same data or the same images in a synchronized state.

Meanwhile, the first virtual machine 520 transmits information regarding the touch input to the second virtual machine 530 or the third virtual machine 540 even though the second and third virtual machines 530 and 540 are operated based on different operating systems. Consequently, the touch input may be rapidly and accurately processed even though the second and third virtual machines 530 and 540 are operated based on different operating systems (OS).

Meanwhile, the first virtual machine 520 may include a display manager 527 configured to control overlays displayed on the first display 180a and the second display 180b and a display layer server 529.

The display layer server 529 may receive a first overlay provided by the second virtual machine 530 and a second overlay provided by the third virtual machine 540.

Meanwhile, the display layer server 529 may transmit a virtual overlay, which is different from the first overlay or the second overlay, to at least one of the second virtual machine 530 or the third virtual machine 540.

Meanwhile, the display manager 527 in the first virtual machine 520 may receive the first overlay provided by the second virtual machine 530 and the second overlay provided by the third virtual machine 540 through the display layer server 529.

The display manager 527 in the first virtual machine 520 may be configured to transmit the virtual overlay, which is different from the first overlay or the second overlay, to at least one of the second virtual machine 530 or the third virtual machine 540 through the display layer server 529.

In response thereto, the second virtual machine 530 may be configured to combine and display the first overlay and the virtual overlay on the first display 180a.

In addition, the third virtual machine 540 may be configured to combine and display the second overlay and the virtual overlay on the second display 180b.

Meanwhile, the first virtual machine 520 may include an input manager 524 configured to receive an input signal from the outside. At this time, the input signal may be an input signal from a predetermined button (start button) in the vehicle, a touch input signal, or a voice input signal.

For example, the input manager 524 in the first virtual machine 520 may receive touch input from the first display 180a or the second display 180b.

Meanwhile, the first virtual machine 520 may include a touch server 528 configured to transmit information regarding the touch input related to the touch input from the first display 180a or the second display 180b to the second virtual machine 530 or the third virtual machine 540.

For example, in response touch input corresponding to the first display 180a, the touch server 528 in the first virtual machine 520 may transmit information regarding the touch input to the second virtual machine 530.

Meanwhile, the touch server 528 in the first virtual machine 520 may receive the touch input from the first display 180a or the second display 180b.

Meanwhile, the first virtual machine 520 includes a first call interface 521 configured to receive sensor data from the sensor device 760 in the vehicle 100 and a radio signal from the tuner 105 in the vehicle 100 and an input and output server interface 522 configured to transmit data corresponding to the sensor data or the radio signal received from the first call interface 521 to at least one of the second virtual machine 530 or the third virtual machine 540. Accordingly, resources may be used efficiently among a plurality of virtual machines.

Meanwhile, the second virtual machine 530 and the third virtual machine 540 may include input and output client interfaces 532 and 542 configured to receive the data corresponding to the sensor data or the radio signal from the first call interface 521 in the first virtual machine 520. Consequently, the sensor data may be rapidly shared.

Meanwhile, the second virtual machine 530 and the third virtual machine 540 do not perform data communication with the sensor device 760 in the vehicle 100 and the tuner 105 in the vehicle 100. Accordingly, resources may be used efficiently among a plurality of virtual machines.

Meanwhile, the first virtual machine 520 may be configured to store the data corresponding to the sensor data or the radio signal in the shared memory 508, and at least one of the second virtual machine 530 or the third virtual machine 540 may receive the data corresponding to the sensor data or the radio signal stored in the shared memory 508. Consequently, the data corresponding to the sensor data or the radio signal may be rapidly received and processed.

Meanwhile, the first virtual machine 520 may transmit a buffer index regarding the shared memory 508, in which the data corresponding to the sensor data or the radio signal are stored, to the second virtual machine 530 or the third virtual machine 540, and the second virtual machine 530 or the third virtual machine 540 may read the data corresponding to the sensor data or the radio signal stored in the shared memory 508 based on the received buffer index. Consequently, the data corresponding to the sensor data or the radio signal may be rapidly shared.

Meanwhile, the first virtual machine 520 may receive and process wheel speed sensor data of the vehicle 100 through the first call interface 521, and may transmit the processed wheel speed sensor data or speed information corresponding to the processed wheel speed sensor data to at least one of the second virtual machine 530 or the third virtual machine 540 through the input and output server interface 522. Consequently, the wheel speed sensor data of the vehicle 100 may be rapidly shared.

Meanwhile, the first virtual machine 520 may receive and process air conditioning data of the vehicle 100 through the first call interface 521, and may transmit the processed air conditioning data or in-vehicle temperature information corresponding to the processed air conditioning data to at least one of the second virtual machine 530 or the third virtual machine 540 through the input and output server interface 522. Consequently, the air conditioning data of the vehicle 100 may be rapidly shared.

Meanwhile, the sensor data from the sensor device 760 in the vehicle 100 may be received based on CAN communication, and the first call interface 521 in the first virtual machine 520 in the processor 175 may further receive USB data or Bluetooth communication data. Consequently, CAN communication-based data may be rapidly shared.

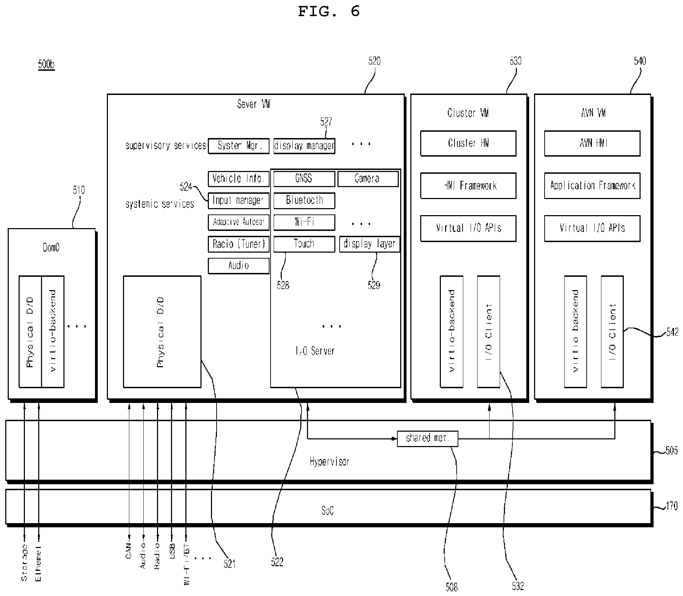

FIG. 6 is a view showing another example of the system driven in the signal processing device according to the embodiment of the present disclosure.

Referring to the figure, in the system 500b driven by the processor 175 in the signal processing device 170, the processor 175 in the signal processing device 170 executes the first to third virtual machines 520 to 540 on the hypervisor 505 in the processor 175, and the first virtual machine 520 in the processor 175 is configured to set the shared memory 508 based on the hypervisor 505 for transmission of data to the second and third virtual machines 530 and 540.

For example, information regarding touch input may be illustrated as the data. Consequently, the information regarding touch input may be transmitted to the second virtual machine 530 or the third virtual machine 540. Eventually, the touch input to the first display 180a or the second display 180b may be rapidly and accurately processed. In addition, the touch input may be rapidly and accurately processed even though the number of virtual machines that are driven is increased.

As another example, image data may be illustrated as the data. Consequently, an image may be displayed on the first display 180a or the second display 180b.

Meanwhile, in response to the same image data being shared in the shared memory 508, the plurality of displays 180a and 180b in the vehicle may display the same data in a synchronized state.

As another example, CAN communication data, audio data, radio data, USB data, wireless communication data, or position information data may be illustrated as the data. Consequently, information regarding the data may be displayed on the first display 180a or the second display 180b.

Meanwhile, although not shown in FIG. 6, the legacy virtual machine 510 may transmit memory data from the memory 140 or Ethernet data by Ethernet communication to the second and third virtual machines 530 and 540 using the shared memory 508 based on the hypervisor 505. Consequently, information corresponding to the memory data or the Ethernet data may be displayed on the first display 180a or the second display 180b.

Meanwhile, the first virtual machine 520 in the system 500b of FIG. 6 may include a display manager 527, a display layer server 529, an input manager 524, and a touch server 528, similarly to the first virtual machine 520 in the system 500 of FIG. 5.

Meanwhile, the input and output server interface 522 in the first virtual machine 520 in the system 500b of FIG. 6 may include a display layer server 529 and a touch server 528, unlike FIG. 5.

The operation of the display manager 527, the display layer server 529, the input manager 524, and the touch server 528 is the same to FIG. 5, and therefore a description thereof will be omitted.

Meanwhile, the first virtual machine 520 of FIG. 6 may further include a system manager for overall system control, a vehicle information manager for vehicle information management, an audio manager for audio control, and a radio manager for radio control.

Meanwhile, the input and output server interface 522 in the first virtual machine 520 in the system 500b of FIG. 6 may further include a GNSS server for GPS information input and output, a Bluetooth server for Bluetooth input and output, a Wi-Fi server for Wi-Fi input and output, and a camera server for camera data input and output.

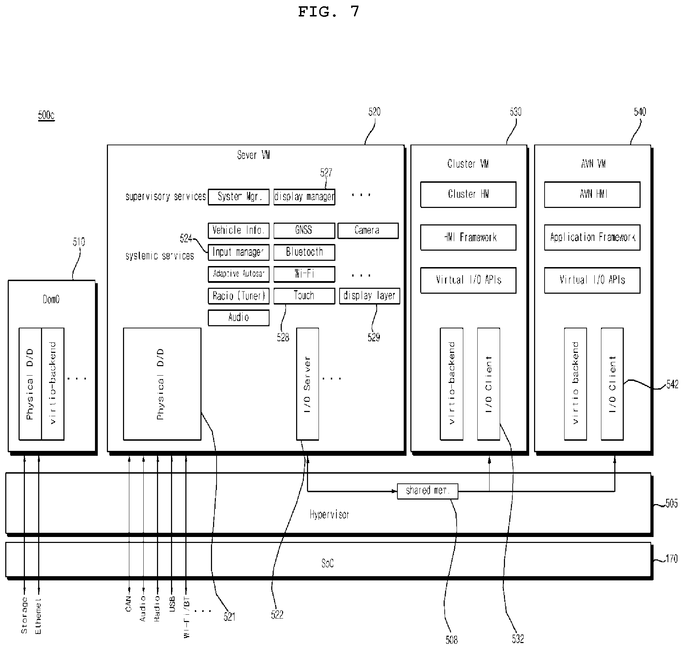

FIG. 7 is a view showing a further example of the system driven in the signal processing device according to the embodiment of the present disclosure.

Referring to the figure, the system 500c driven by the processor 175 in the signal processing device of FIG. 7 is almost similar to the system 500b of FIG. 6.

That is, like FIG. 6, the processor 175 of FIG. 7 executes the first to third virtual machines 520 to 540 on the hypervisor 505 in the processor 175.

In FIG. 7, however, the display layer server 529 and the touch server 528 may be provided and executed in the first virtual machine 520 outside the input and output server interface 522, unlike FIG. 6.

In addition, the GNSS server for GPS information input and output, the Bluetooth server for Bluetooth input and output, the Wi-Fi server for Wi-Fi input and output, and the camera server for camera data input and output may be provided and executed in the first virtual machine 520 outside the input and output server interface 522, unlike FIG. 6.

That is, the display manager 527, the display layer server 529, the input manager 524, and the touch server 528 may be provided and executed in the first virtual machine 520.

Meanwhile, the input and output server interface 522 in the first virtual machine 520 in the system 500b of FIG. 6 may include a display layer server 529 and a touch server 528, unlike FIG. 5.

The operation of the display manager 527, the display layer server 529, the input manager 524, and the touch server 528 is the same to FIG. 5, and therefore a description thereof will be omitted.

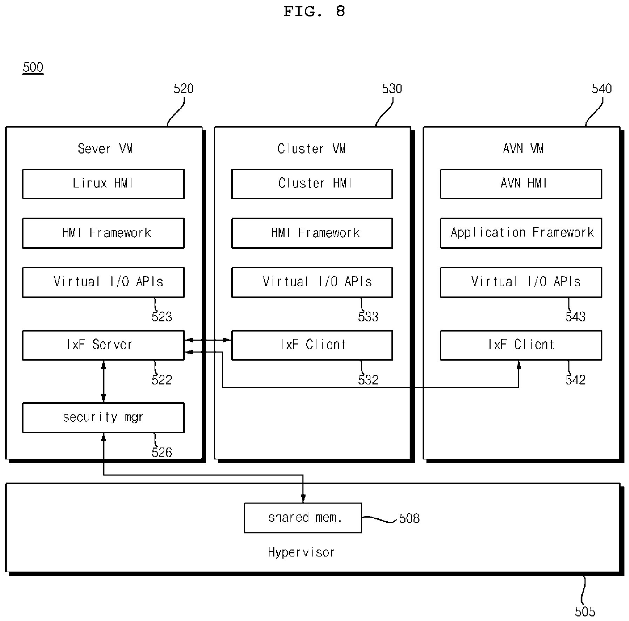

FIGS. 8 to 9B are views referred to in the description of FIG. 5.

First, FIG. 8 illustrates that the first to third virtual machines 520 to 540 are executed on the hypervisor 505 in the processor 175 of the system 500 according to the present disclosure and that the first virtual machine 520 in the processor 175 is configured to set the shared memory 508 based on the hypervisor 505 in order to transmit the same data to the second virtual machine 530 and the third virtual machine 540.

Consequently, the first display 180a and the second display 180b in the vehicle may display the same images in a synchronized state.

Meanwhile, high-speed data communication may be performed between the plurality of virtual machines. Furthermore, high-speed data communication may be performed even though the plurality of virtual machines is driven by different operating systems.

Meanwhile, the first virtual machine 520 in the processor 175 may not allocate memories corresponding in number to the virtual machines but may use a single shared memory 508, not memory allocation in response to transmitting the data processed by the first virtual machine 520 to another virtual machine. Consequently, 1:N data communication using the shared memory 508, not 1:1 data communication, may be performed between the virtual machines.

Meanwhile, the first virtual machine 520 in the processor 175 may include an input and output server interface 522 and a security manager 526.

Meanwhile, the second virtual machine 530 and the third virtual machine 540 may include input and output client interfaces 532 and 542, respectively. Consequently, high-speed data communication between the plurality of virtual machines may be performed using the input and output server interface 522 and the input and output client interfaces 532 and 542.

The input and output server interface 522 in the first virtual machine 520 may receive requests for transmission of the same data from the input and output client interfaces 532 and 542 in the second virtual machine 530 and the third virtual machine 540, and may transmit shared data to the shared memory 508 through the security manager 526 based thereon. Consequently, the shared data may be rapidly and accurately shared.

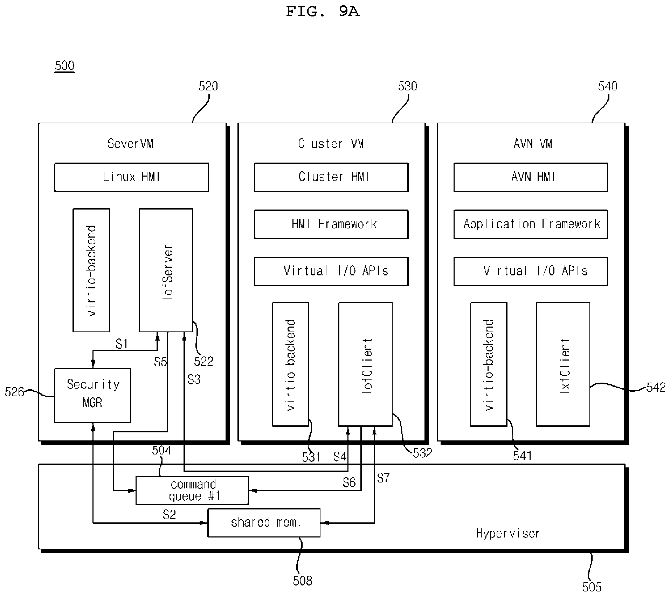

FIG. 9A is a view illustrating transmission of shared data in more detail.

Referring to the figure, in order to transmit shared data, the input and output server interface 522 in the first virtual machine 520 transmits a request for allocation of the shared memory 508 to the security manager 526 (S1).

Subsequently, the security manager 526 may allocate the shared memory 508 using the hypervisor 505 (S2), and may write shared data in the shared memory 508.

Meanwhile, the input and output client interfaces 532 and 542 may transmit a request for connection to the input and output server interface 522 after allocation of the shared memory 508 (S3).

Meanwhile, the input and output server interface 522 transmits information regarding shared memory 508 including key data to the input and output client interfaces 532 and 542 after allocation of the shared memory 508 (S4). At this time, the key data may be private key data.

Meanwhile, the first virtual machine 520 in the processor 175 may transmit information regarding the shared memory 508 to the second virtual machine 530 and the third virtual machine 540 after setting of the shared memory 508.

Subsequently, the input and output server interface 522 in the first virtual machine 520 is configured to generate a command or a command queue for event processing, other than data, to control distributed processing between the virtual machines (S5).

The figure illustrates that a command queue is generated in a command queue buffer 504 in the hypervisor 505 under control of the input and output server interface 522. However, the present disclosure is not limited thereto, and the command queue may be generated in the first virtual machine 520, not the hypervisor 505, under control of the input and output server interface 522.

Subsequently, the input and output client interfaces 532 and 542 access the command queue buffer 504 to receive the generated command queue or information regarding the command queue (S6).

For example, in response to the commands transmitted to the input and output client interfaces 532 and 542 being the same, the generated command queues may be the same.

As another example, in response to the commands transmitted to the input and output client interfaces 532 and 542 being different from each other, different command queues may be transmitted to the input and output client interfaces 532 and 542.

Subsequently, the input and output client interfaces 532 and 542 may access the shared memory 508 based on the received key data (S5), and may copy or read the shared data from the shared memory 508 (S7).

Particularly, in response to the input and output client interfaces 532 and 542 receiving the same shared data, the input and output client interfaces 532 and 542 may access the shared memory 508 based on the same command queues and the same key data (S5), and may copy or read the shared data from the shared memory 508.

Consequently, the second virtual machine 530 and the third virtual machine 540 may access the shared memory 508, and may eventually share the shared data.

For example, in the case in which the shared data are image data, the second virtual machine 530 and the third virtual machine 540 may share the image data, and eventually the plurality of displays 180a and 180b in the vehicle may display the same shared images in a synchronized state.

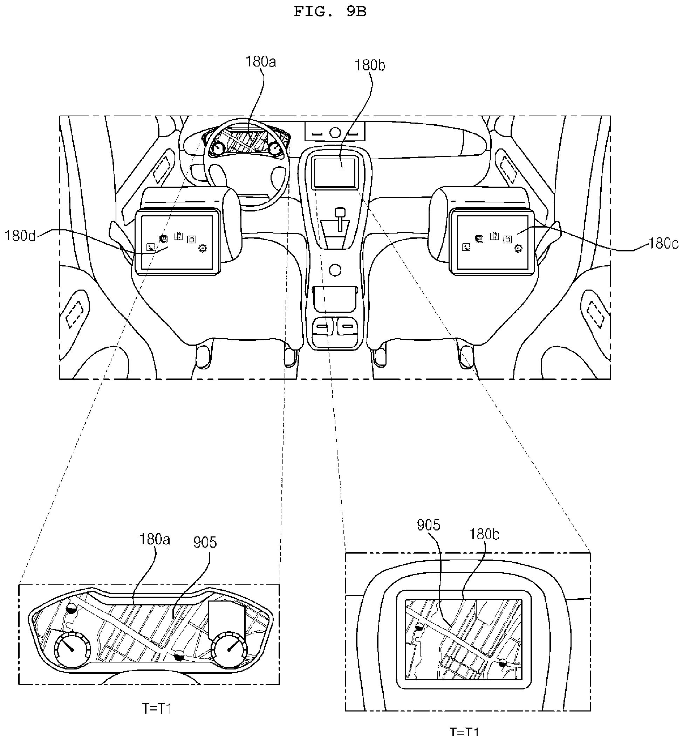

FIG. 9B illustrates that, by the system 500 of FIG. 9A, the second virtual machine 530 displays image data received through the shared memory 508 on the first display 180a, and the third virtual machine 540 displays image data received through the shared memory 508 on the second display 180b.

FIG. 9B illustrates that an image 905a displayed on the first display 180a and an image 905b displayed on the second display 180b are synchronized, whereby the same images 905a and 905b are displayed at the time of T1.

That is, image data processed by the first virtual machine 520 in the processor 175 are transmitted to the second virtual machine 530 and the third virtual machine 540 through the shared memory 508, and the first image 905a displayed on the first display 180a and the second image 905b displayed on the second display 180b based on the image data may be the same. Consequently, the plurality of displays 180a and 180b in the vehicle may display the same images in a synchronized state.

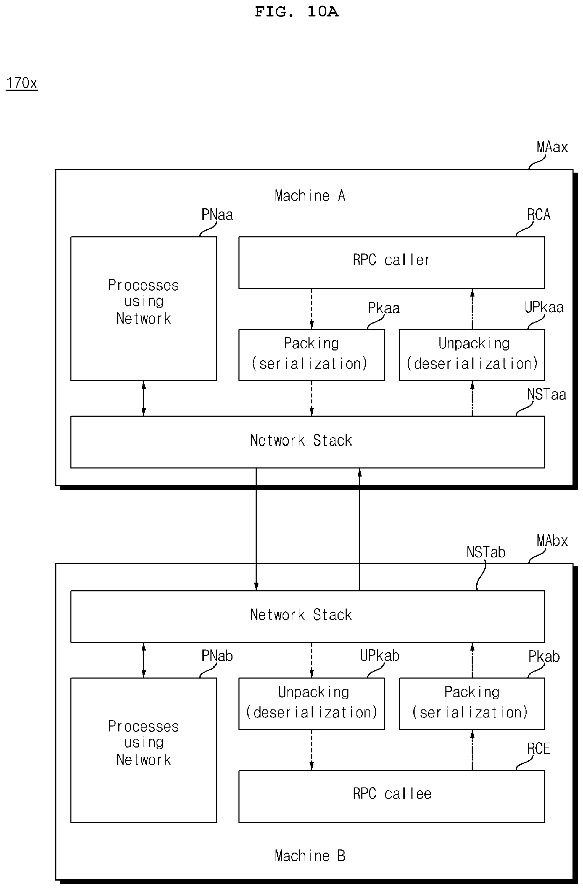

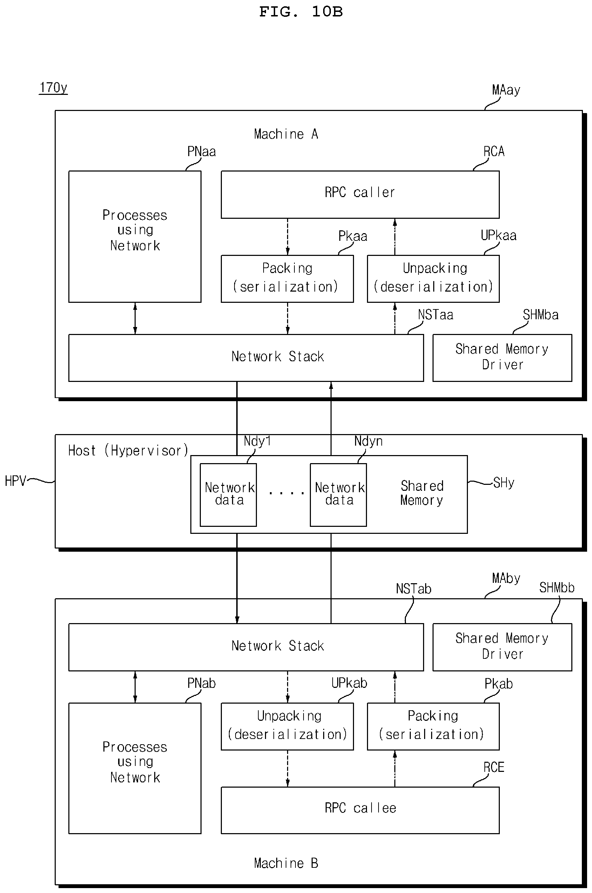

FIGS. 10A and 10B are diagrams illustrating a signal processing device related to the present disclosure.

FIG. 10A is a diagram illustrating an example of a signal processing device related to the present disclosure.

Referring to FIG. 10A, a signal processing device 170x related to the present disclosure may execute a plurality of virtual machines MAax and MAbx.

The plurality of virtual machines MAax and MAbx may use remote procedure call (RPC) based on a network communication to use services.

To this end, a first virtual machine MAbx of the plurality of virtual machines MAax and MAbx executes a callee RCE that provides a service for the RPC, and a second virtual machine MAax of the plurality of virtual machines MAax and MAbx executes a caller RCA for using the RPC service.

The plurality of virtual machines MAax and MAbx may include network stacks NSTaa and NSTab, respectively, which convert network data into an electrical signal.

Meanwhile, the second virtual machine MAax may include a packer Pkaa that receives a request from the caller RCA, serializes the request, and provides the serialized request to the network stack NSTaa, an unpacker UPkaa that receives a response from the network stack NSTaa, deserializes the response, and provides the deserialized response to the caller RCA, and a processor PNaa using a network.

Meanwhile, the first virtual machine MAbx may include an unpacker UPkab that receives a request from the network stack NSTab, deserializes the request, and provides the deserialized request to the callee RCE, a packer Pkab that receives a response from the callee RCE, serializes the response, and provides the serialized response to the network stack NSTab, and a processor PNab using a network.

In the signal processing device 170x of FIG. 10A, the Remote Procedure Call based on a network communication is used, such that the Remote Procedure Call can be used if network is available.

However, the signal processing device 170x has a drawback in that the Remote Procedure Call cannot be used due to booting and the like before the network is activated, and there is also a problem of overhead caused by network layers.

FIG. 10B is a diagram explaining another example of a signal processing device related to the present disclosure.

Referring to FIG. 10B, a signal processing device 170y related to the present disclosure may execute a plurality of virtual machines MAay and MAby, and a hypervisor HPV including a shared memory Shy.

The plurality of virtual machines MAay and MAby may use remote procedure call (RPC) based on a network communication to use services.

To this end, a first virtual machine MAby of the plurality of virtual machines MAay and MAby executes a callee RCE that provides a service for the RPC, and a second virtual machine MAay of the plurality of virtual machines MAay and MAby executes a caller RCA for the RPC.

Meanwhile, the plurality of virtual machines MAay and MAby may include network stacks NSTaa and NSTab, respectively, which convert network data into an electrical signal.

Meanwhile, the second virtual machine MAay may include a packer Pkaa that receives a request from the caller RCA, serializes the request, and provides the serialized request to the network stack NSTaa, an unpacker UPkaa that receives a response from the network stack NSTaa, deserializes the response, and provides the deserialized response to the caller RCA, a processor PNaa using a network, and a shared memory driver SHMba for driving the shared memory SHy.

Meanwhile, the first virtual machine MAby may include an unpacker UPkab that receives a request from the network stack NSTab, deserializes the request, and provides the deserialized request to the callee RCE, a packer Pkab that receives a response from the callee RCE, serializes the response, and provides the serialized response to the network stack NSTab, a processor PNab using a network, and a shared memory driver SHMbb for driving the shared memory SHy.

Compared to the signal processing device 170x of FIG. 10A, the signal processing device 170y uses a hypervisor including the shared memory, such that network data may be transmitted using the shared memory SHy instead of converting the network data into an electrical signal and transmitting the network data via a physical channel.

However, in the signal processing device 170y, the Remote Procedure Call based on a network communication is used, such that the Remote Procedure Call can be used if network is available. However, similarly to the signal processing device 170x, the signal processing device 170y has a drawback in that the Procedure Call cannot be used due to booting and the like before the network is activated, and there is also a problem of overhead caused by network layers.

In addition, the signal processing device 170y also has a drawback in that the shared memory SHy is used for the Remote Procedure Call, and data of all the processes using the network are mixed in the shared memory SHy, such that resources may not be used efficiently, and rapid interaction may not be provided.

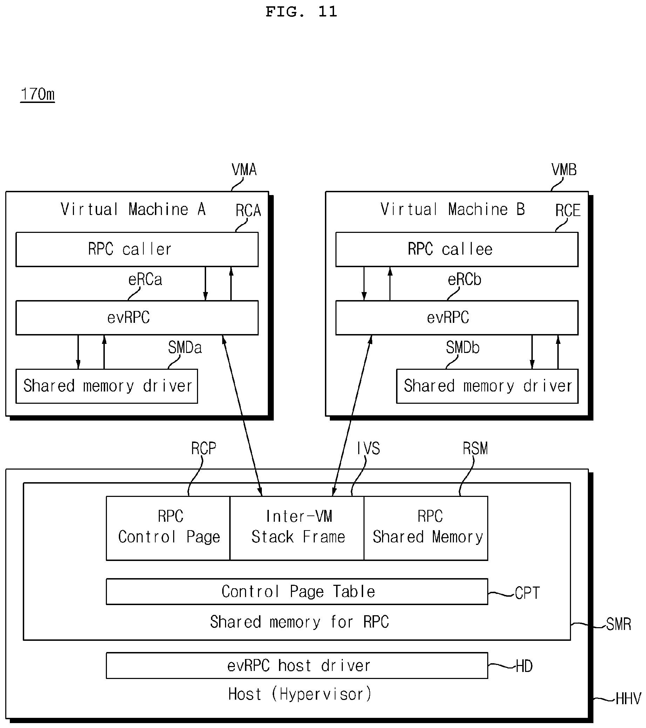

In order to solve the above problems, embodiments of the present disclosure propose a scheme for setting an mutual sharing area IVS for the Remote Procedure Call in the shared memory and a method of using the mutual sharing area, which will be described below with reference to FIG. 11 and subsequent figures.

FIG. 11 is a diagram explaining internal operation of a signal processing device according to an embodiment of the present disclosure.

Referring to FIG. 11, a signal processing device 170m according to an embodiment of the present disclosure comprises a processor 175 configured to perform signal processing for a display installed in a vehicle, and the processor 175 executes a hypervisor HHV and executes a plurality of virtual machines VMA and VMB on the hypervisor.

A first virtual machine VMB and a second virtual machine VMA of the plurality of virtual machines VMA and VMB share an mutual sharing area IVS for Remote Procedure Call (RPC) in a shared memory of the hypervisor HHV.

Meanwhile, the mutual sharing area IVS may be referred to as an Inter-VM Stack Frame as illustrated herein.

Meanwhile, the first virtual machine VMB executes a callee RCE, which receives data in response to a caller RCA of the second virtual machine VMA, and a first call interface eRCb for access to the mutual sharing area IVS.

That is, the first virtual machine VMB executes the callee RCE for providing a Remote Procedure Call service and executes the first call interface eRCb for access to the mutual sharing area IVS.

Meanwhile, the second virtual machine VMA executes the caller RCA for the Remote Procedure Call and executes a second call interface eRCa for access to the mutual sharing area IVS.

That is, the second virtual machine VMA executes the caller RCA for using the Remote Procedure Call service, and executes the second call interface eRCa for access to the mutual sharing area IVS.

Accordingly, resources may be used efficiently between the plurality of virtual machines VMA and VMB. Particularly, a call and response delay time may be reduced during the remote procedure call between the plurality of virtual machines VMA and VMB. In addition, data sharing and remote procedure call may be combined.

Meanwhile, the call interface in the first call interface eRCb and the second call interface eRCa may be referred to as an Embedded Virtualization system RPC.

Meanwhile, unlike FIG. 10A or FIG. 10B, the signal processing device 170m according to an embodiment of the present disclosure executes the call interfaces eRCa and eRCb in the virtual machines VMA and VMB, respectively.

Meanwhile, the first virtual machine VMB may further execute a first shared memory driver SMDb for driving the shared memory SMR.

Meanwhile, the second virtual machine VMA may further execute a second shared memory driver SMDa for driving the shared memory SMR.

Meanwhile, a host driver HD and the shared memory SMR may be executed in the hypervisor HHV.

Meanwhile, a control page table CPT, an RPC control page, the mutual sharing area IVS, and a call storage area RSM may be executed or set in the shared memory SMR.

Meanwhile, the call storage area RSM may be referred to as an RPC shared memory.

Meanwhile, the host driver HD may generate the shared memory SMR for the Remote Procedure Call (RPC). In addition, the host driver HD may generate a control page table CPT.

Meanwhile, shared memory drivers SMDa and SMDb of the respective virtual machines VMA and VMB may control allocation and deallocation of the shared memory SMR, generation of memory areas, and the like.

Meanwhile, the first call interface eRCb or the second call interface eRCa may provide Remote Procedure Call (RPC) via the shared memory SMR.

For example, the first call interface eRCb or the second call interface eRCa may generate or manage the RPC control page.

In another example, the first call interface eRCb or the second call interface eRCa may generate or manage a Remote Procedure Call channel including the mutual sharing area IVS and the call storage area RSM.

Meanwhile, the Remote Procedure Call by the caller RCA may be executed by writing or reading information in the mutual sharing area IVS via the second call interface eRCa.

Parameter data transmitted from the caller RCA may be copied to the mutual sharing area IVS along with meta data, without being serialized.

Meanwhile, in the case of a pointer parameter, contents of an object pointed by a pointer are copied to the call storage area RSM, and the pointer is transmitted to the call storage area RSM.

Meanwhile, the parameter data present in the call storage area RSM are transmitted to the pointer, without being copied.

Meanwhile, the second call interface eRCa in the second virtual machine VMA writes call-related information to the mutual sharing area IVS, and notify the information to the first virtual machine VMB, and the first virtual machine VMB may receive the data in the mutual sharing area IVS. Accordingly, resources may be used efficiently between the plurality of virtual machines VMA and VMB. Particularly, a call and response delay time may be reduced during the Remote Procedure Call between the plurality of virtual machines VMA and VMB.

Meanwhile, the first call interface eRCb in the first virtual machine VMB may write result data, processed based on the received data, to the mutual sharing area IVS, and notify the data to the second virtual machine VMA, and the second virtual machine VMA may receive the result data written to the mutual sharing area IVS. Accordingly, resources may be used efficiently between the plurality of virtual machines VMA and VMB. Particularly, a call and response delay time may be reduced during the Remote Procedure Call between the plurality of virtual machines VMA and VMB.

Meanwhile, the first call interface eRCb in the first virtual machine VMB or the second call interface eRCa in the second virtual machine VMA may be configured to store data, having a size exceeding a capacity of the mutual sharing area IVS, in a separate area RSM of the shared memory SMR. Accordingly, resources may be used efficiently between the plurality of virtual machines VMA and VMB. Particularly, a call and response delay time may be reduced during the Remote Procedure Call between the plurality of virtual machines VMA and VMB.

Meanwhile, in the case of parameter data transmitted form the caller RCA, the second call interface eRCa may copy the parameter data and meta data to the mutual sharing area IVS, and in the case of pointer parameter, the second call interface eRCa may transmit data, corresponding to the pointer, to the call storage area RSM in the shared memory SMR. Accordingly, resources may be used efficiently between the plurality of virtual machines VMA and VMB. Particularly, a call and response delay time may be reduced during the Remote Procedure Call between the plurality of virtual machines VMA and VMB.

Meanwhile, the first call interface eRCb or the second call interface eRCa may generate or manage the control page RCP in the shared memory SMR or may generate or manage the mutual sharing area IVS. Accordingly, resources may be used efficiently between the plurality of virtual machines VMA and VMB. Particularly, a call and response delay time may be reduced during the Remote Procedure Call between the plurality of virtual machines VMA and VMB.

Meanwhile, the first call interface eRCb or the second call interface eRCa may generate or delete a Remote Procedure Call channel including the mutual sharing area IVS and the call storage area RSM. Accordingly, resources may be used efficiently between the plurality of virtual machines VMA and VMB. Particularly, a call and response delay time may be reduced during the Remote Procedure Call between the plurality of virtual machines VMA and VMB.

Meanwhile, the first call interface eRCb or the second call interface eRCa may interact with a host driver HD external to the shared memory SMR via the control page table CPT and the control page RCP in the shared memory SRM, to generate or delete the remote procedure call channel including the mutual sharing area IVS and the call storage area RSM. Accordingly, resources may be used efficiently between the plurality of virtual machines VMA and VMB. Particularly, a call and response delay time may be reduced during the Remote Procedure Call between the plurality of virtual machines VMA and VMB.

Meanwhile, the first call interface eRCb or the second call interface eRCa may generate or delete the control page RCP via the host driver HD. Accordingly, resources may be used efficiently between the plurality of virtual machines VMA and VMB. Particularly, a call and response delay time may be reduced during the Remote Procedure Call between the plurality of virtual machines VMA and VMB.

Meanwhile, the first call interface eRCb or the second call interface eRCa may generate the control pages RCP in a number corresponding to the number of providers of services related to the Remote Procedure Call. Accordingly, resources may be used efficiently between the plurality of virtual machines VMA and VMB. Particularly, a call and response delay time may be reduced during the Remote Procedure Call between the plurality of virtual machines VMA and VMB.

Meanwhile, the first call interface eRCb or the second call interface eRCa may generate the remote procedure call channels in a number corresponding to the number of providers of services related to the Remote Procedure Call. Accordingly, resources may be used efficiently between the plurality of virtual machines VMA and VMB. Particularly, a call and response delay time may be reduced during the Remote Procedure Call between the plurality of virtual machines VMA and VMB.

Meanwhile, the first call interface eRCb or the second call interface eRCa may be configured to store data, having a size exceeding the mutual sharing area IVS, in the call storage area RSM, and may be configured to write an address of the call storage area RSM to the mutual sharing area IVS. Accordingly, resources may be used efficiently between the plurality of virtual machines VMA and VMB. Particularly, a call and response delay time may be reduced during the Remote Procedure Call between the plurality of virtual machines VMA and VMB.

Meanwhile, the first call interface eRCb or the second call interface eRCa may be configured to store data, having a size exceeding the mutual sharing area IVS, in the call storage area RSM, and may be configured to write an address of the call storage area RSM to the mutual sharing area IVS. Accordingly, resources may be used efficiently between the plurality of virtual machines VMA and VMB. Particularly, a call and response delay time may be reduced during the Remote Procedure Call between the plurality of virtual machines VMA and VMB.

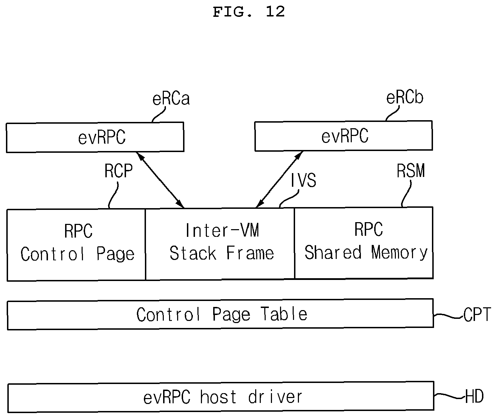

FIGS. 12 to 16D are diagrams referred to in the description of FIG. 11.

First, FIG. 12 is a diagram referred to in the description of internal operation of the shared memory of FIG. 11.

Referring to FIG. 12, the control page RCP is present in the shared memory SMR, and corresponds to the callee RCE which is a provider of the remote procedure call service.

That is, the control page RCP is generated in a number corresponding to the number of callees RCE which are providers of the remote procedure call service.

Meanwhile, the control page RCP may control the first call interface eRCb to generate or delete the remote procedure call channel, including the mutual sharing area IVS and the call storage area RSM, via the host driver HD (evRPC host driver) .

Meanwhile, the control page RCP allows the first call interface eRCb to allocate or return memory from the call storage area RSM via the host driver HD.

Meanwhile, the remote procedure call channel is composed of the mutual sharing area IVS and the call storage area RSM, and corresponds to the caller RCA which is the user of the remote procedure call service.

That is, the remote procedure call channel is generated in a number corresponding to the number of the callers RCA which are users of the remote procedure call service.

Meanwhile, the mutual sharing area IVS is one of the elements in the remote procedure call channel. The first call interface eRCb writes requested remote procedure call information and result information to the mutual sharing area IVS, and may notify the information to a counterpart or the other party via the mutual sharing area IVS.

The remote procedure call information may be information related to a counterpart and request, and may include, for example, a phone number query and counterpart name information. The result information may include, for example, phone number information.

The call storage area RSM is one of the elements in the remote procedure call channel, and is shared by the callee RCE and the caller RCA.

The call storage area RSM is used in the case where data required for the remote procedure call has a large size.

If the first call interface eRCb transmits a request to the host driver HD via the control page RCP, memory is allocated to the call storage area RSM or memory is returned.

For example, in response to a request for a screen capture, the screen capture data has a relatively large size. In this case, memory may be allocated to the call storage area RSM to store the screen capture data, and the address of the stored data may be written to the mutual sharing area IVS and may be transmitted. Accordingly, the side that has requested the screen capture may access the memory to use the screen capture data.

Specifically, if the caller RCA in the second virtual machine VMA requests screen capture, the first virtual machine VMB may be configured to store screen capture data in the call storage area RSM, and may write the address of the call storage area RSM to the mutual sharing area IVS. Accordingly, by using the call storage area RSM and the mutual sharing area IVS, the screen capture data may be simply and rapidly transmitted from the second virtual machine VMA to the first virtual machine VMB. Accordingly, resources may be used efficiently between the plurality of virtual machines VMA and VMB. Particularly, a call and response delay time may be reduced during the Remote Procedure Call between the plurality of virtual machines VMA and VMB.

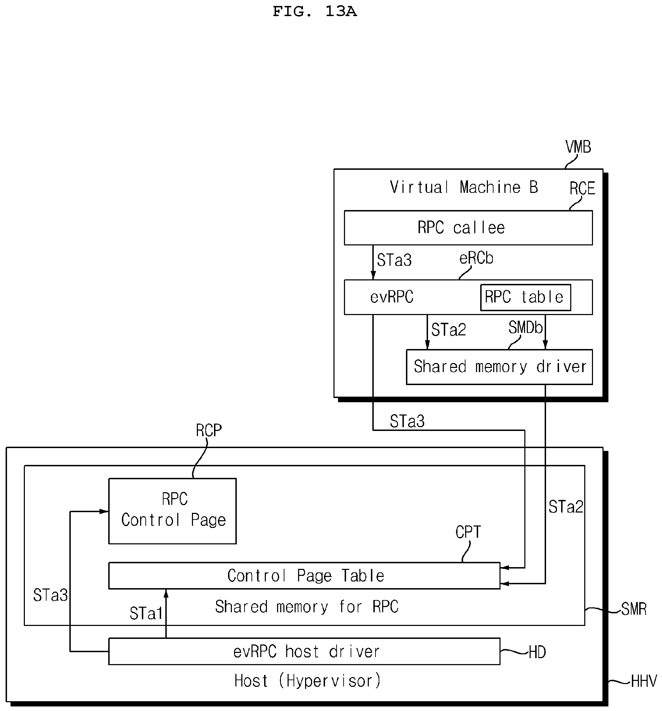

FIG. 13A is a diagram referred to in the description of an example of registering or deleting a remote procedure call service.

Referring to the drawing, in order to register a remote procedure call service, the host driver HD generates a control page table CPT in the call storage area RSM (STa1).

Then, the first call interface eRCb on the callee (RCE) side brings the address of the control page table CPT via a first shared memory driver SMDb (STa2).

Next, the callee RCE registers a remote procedure call (STa3).

Specifically, the first call interface eRCb writes the remote procedure call, the registration of which is requested by the caller RCE, to the remote procedure call table.

Then, the first call interface eRCb transmits a request for generating a remote procedure call control page RCP via the control page table CPT.

Then, the host driver HD generates the control page RCP in the call storage area RSM and writes related information to the control page table CPT.

Meanwhile, in order to delete the registered remote procedure call service, deletion is requested via the control page table CPT, and in response to the request, the host driver HD deletes the control page RCP and updates the control page table CPT.

That is, the first virtual machine VMB receives data about the control page table CPT in the shared memory SMR, and may register a first remote procedure call service based on the received data about the control page table CPT.

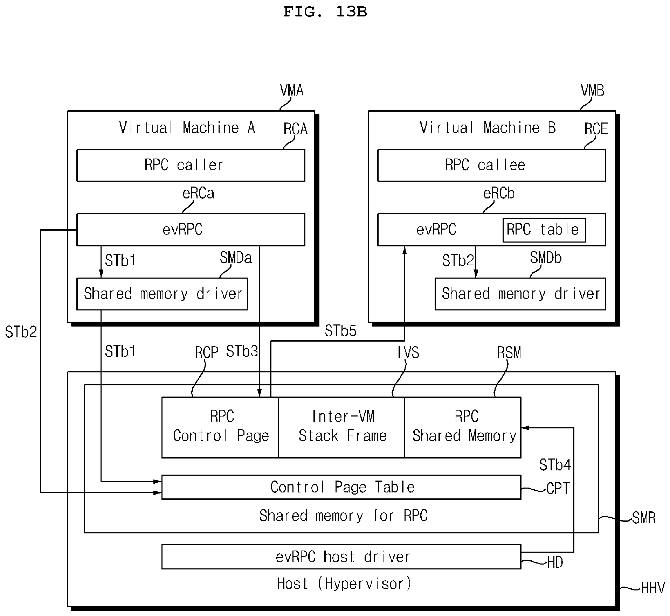

FIG. 13B is a diagram referred to in the description of an example of generating and deleting a remote procedure call channel.

Referring to the FIG. 13B, in order to generate a remote procedure call channel, a second call interface eRCa on the remote procedure caller (RCA) side brings the address of the control page table CPT via the second shared memory driver SMDa (STb1).

Then, the second call interface eRCa on the remote procedure caller (RCA) side brings the address of the control page RCP via the control page table CPT (STb2).

Subsequently, the second call interface eRCa on the remote procedure caller (RCA) side transmits a request for generating a remote procedure call channel, including the mutual sharing area IVS and the call storage area RSM, via the control page RCP (STb3).

Next, the host driver HD generates the mutual sharing area IVS and the call storage area RSM, and writes the information to the control page RCP (STb4).

Then, the first call interface eRCb on the callee (RCE) side brings generated channel information from the control page RCP (STb5).

For example, if generation of the remote procedure call channel including the mutual sharing area IVS and the call storage area RSM is completed, the first call interface eRCb on the callee (RCE) side receives notification that the channel is generated, and may receive the generated channel information from the control page RCP.

Meanwhile, a process of deleting the remote procedure call channel is performed in the same manner as the process of generating the channel, in which a request for deleting the remote procedure call channel is transmitted via the control page RCP, and the host driver HD deletes the remote procedure call channel and updates the control page RCP.

Then, the first call interface eRCb on the callee (RCE) side, which is the remote procedure call server side, brings the deleted channel information of the control page RCP from the control page RCP.

That is, the second virtual machine VMA requests the shared memory SMR to generate the remote procedure call channel, including the mutual sharing area IVS and the call storage area RSM, in the shared memory SMR and may receive information about the generated remote procedure call channel.

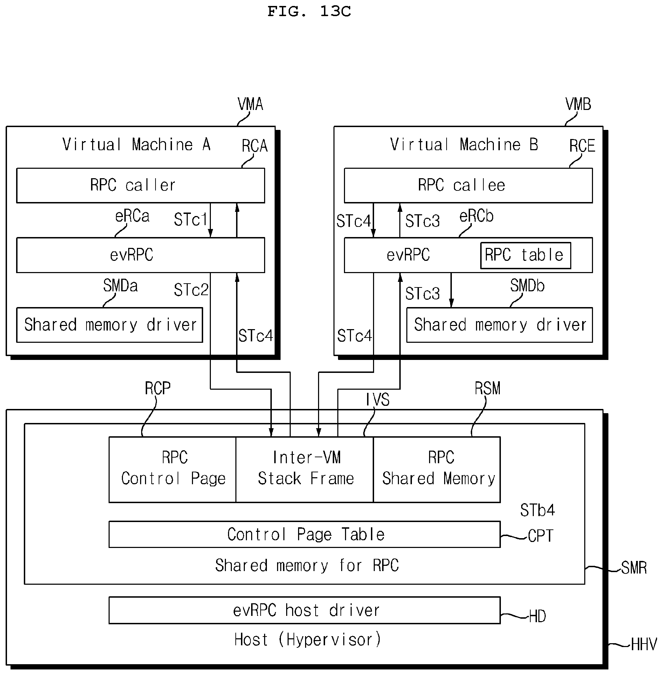

FIG. 13C is a diagram referred to in the description of remote procedure call in a first mode.

Referring to FIG. 13C, the first mode is a remote procedure call in a normal mode, in which a data size corresponding to the remote procedure call is smaller than or equal to a capacity of the mutual sharing area IVS.

First, for the remote procedure call, the caller RCA transmits a request for the remote procedure call to the second call interface eRCa (STc1).

Then, the second call interface eRCa on the remote procedure caller (RCA) side writes call-related information to the mutual sharing area IVS and requests a call (STc2).

Here, the call-related information may include a function identifier (unique number or character string), the number of function call arguments, offset of the first argument, function arguments, and the like.

Then, the first call interface eRCb on the callee (RCE) side receives the call request, and reads information from the mutual sharing area IVS to bring information about a function to be called from the remote procedure call table, and calls the function along with a function argument written to the mutual sharing area IVS (STc3).

In this case, if there is a return value, the address of the mutual sharing area IVS for a return value of the mutual sharing area is provided together, and the callee RCE may directly store the return value in this area.

Then, once the call is completed, the first call interface eRCb on the callee (RCE) side notifies completion of the call via the mutual sharing area IVS, and upon receiving the notification about the completion of the call, the second call interface eRCa on the caller (RCA) side that executes the remote procedure call notifies the remote procedure caller RCA of the completion (STc4).

For example, in the case of a synchronous call, the remote procedure caller RCA is blocked in the remote procedure call request until notification about the completion of call is received, and a call result is returned once notification about the completion of the call is received.

In another example, in the case of an asynchronous call, a remote procedure call request of the remote procedure caller RCA is returned immediately, and the result is transmitted through a separate context.

By using the method illustrated in FIG. 13C, a call and response delay time may be reduced during the remote procedure call among the plurality of virtual machines VMA and VMB. In addition, data sharing and remote procedure call may be combined.

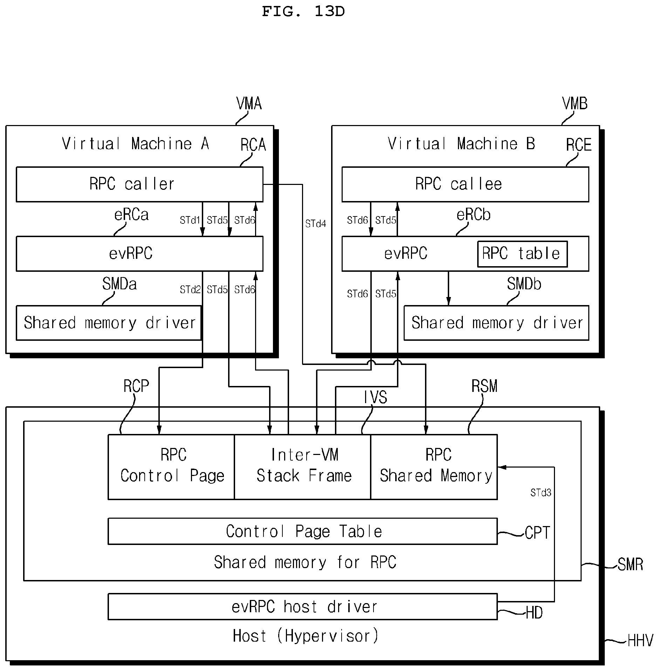

FIG. 13D is a diagram referred to in the description of remote procedure call in a second mode.

Referring to FIG. 13D, the second mode is a remote procedure call in a normal mode, in which a data size corresponding to the remote procedure call exceeds a capacity of the mutual sharing area IVS.

First, the remote procedure caller RCA transmits a request for memory allocation to the second call interface eRCa (STd1).

Then, the second call interface eRCa on the remote procedure caller (RCA) side transmits a request for memory allocation to the call storage area RSM of a corresponding channel via the control page RCP (STd2).

Next, the host driver HD allocates memory to the call storage area RSM of the corresponding channel and returns the address (STd3).

Then, the remote procedure caller RCA directly writes data to the allocated memory (STd4).

Subsequently, the remote procedure caller RCA transmits a request for remote procedure call to the second call interface eRCa, and the second call interface eRCa processes the remote procedure call request as illustrated above. In this case, a function argument is a memory address of the call storage area RSM (STd5).

Next, a process of returning the call result is the same as FIG. 13C (STd6).

That is, as illustrated in FIG. 13C, the first call interface eRCb on the callee (RCE) side receives a call request, and reads information from the call storage area RSM and the mutual sharing area IVS to bring information about a function to be called from the remote procedure call table, and calls the function along with a function argument written to the mutual sharing area IVS.

In this case, if there is a return value, the address of the mutual sharing area IVS for a return value of the mutual sharing area is provided together, and the callee RCE may directly store the return value in this area.

Then, once the call is completed, the first call interface eRCb on the callee (RCE) side notifies completion of the call via the mutual sharing area IVS, and upon receiving the notification about the completion of the call, the second call interface eRCa on the caller (RCA) side that executes the remote procedure call notifies the remote procedure caller RCA of the completion.

Meanwhile, by using the method as illustrated in FIG. 13D, even data exceeding the capacity of the mutual sharing area IVS may be transmitted or shared during the remote procedure call among the plurality of virtual machines VMA and VMB. Further, a call and response delay time may be reduced during the remote procedure call among the plurality of virtual machines VMA and VMB. In addition, data sharing and remote procedure call may be combined.

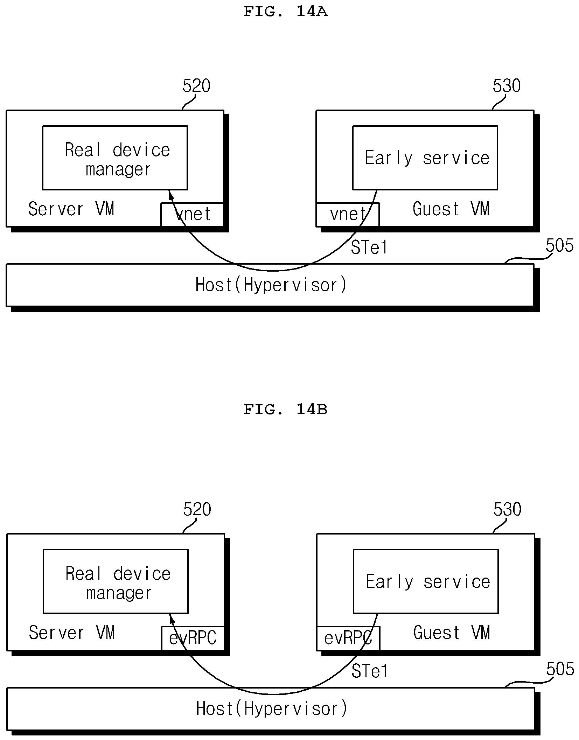

FIGS. 14A and 14B are diagrams illustrating an example of executing remote procedure call after booting.

First, FIG. 14A illustrates an example of data transmission for a screen display service between a server virtual machine 520 and a guest virtual machine 530 using a network.

For example, in order to provide the screen display service between the server virtual machine 520 and the guest virtual machine 530, the guest virtual machine 530 may transmit data to the server virtual machine 520 by using a network.

Specifically, the guest virtual machine 530 may transmit data to the server virtual machine 520 after all network stacks are loaded.

However, it takes a predetermined time for all the network stacks to be loaded after booting.

Accordingly, the method of FIG. 14A has a drawback in that the remote procedure call cannot be used at the initial booting of a system before a network is activated.

FIG. 14B illustrates an example of data transmission for a screen display service between a server virtual machine 520 and a guest virtual machine 530 using the mutual sharing area IVS and the call interfaces eRCa and eRCb.

For example, in order to provide the screen display service between the server virtual machine 520 and the guest virtual machine 530, the guest virtual machine 530 may transmit data to the server virtual machine 520 by using the mutual sharing area IVS and the call interfaces eRCa and eRCb.

Particularly, as illustrated in FIGS. 11 to 13D, the guest virtual machine 530 may transmit data to the server virtual machine 520 by using the mutual sharing area IVS and the call interfaces eRCa and eRCb.

In comparison with FIG. 14A, all the network stacks are not required to be loaded after booting, such that by using the mutual sharing area IVS and the call interfaces eRCa and eRCb, data may be transmitted to the server virtual machine 520 immediately after booting, rather than after a predetermined time. Accordingly, a call and response delay time may be reduced during the remote procedure call among the plurality of virtual machines VMA and VMB. In addition, data sharing and remote procedure call may be combined.

Meanwhile, the guest virtual machine 530 of FIG. 14B may correspond to the second virtual machine VMA of FIGS. 11 to 13D, and the server virtual machine 520 of FIG. 14B may correspond to the first virtual machine VMB of FIGS. 11 to 13D.

That is, in response to the remote procedure call of the second virtual machine VMA, the first virtual machine VMA may transmit data to the second virtual machine VMA immediately after booting by using the mutual sharing area IVS. Accordingly, resources may be used efficiently between the plurality of virtual machines VMA and VMB. Particularly, a call and response delay time may be reduced during the Remote Procedure Call between the plurality of virtual machines VMA and VMB.

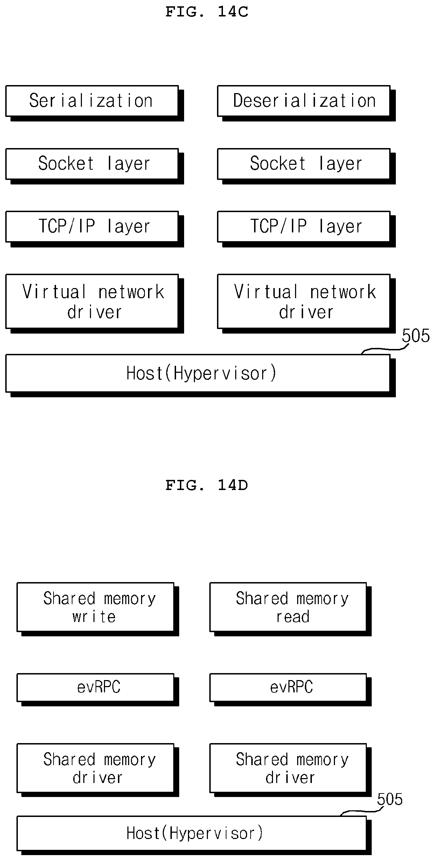

FIGS. 14C and 14D are diagrams illustrating an example of executing remote procedure call in the case of receiving sensing data repeatedly.

First, FIG. 14C illustrates an example of a system that repeatedly receives sensing data.

Referring to FIG. 14C, there is a drawback in that in the case of receiving sensing data repeatedly by using a network, such as virtual network drivers, TCP/IP layers, socket layers, serialization, deserialization, etc., on the hypervisor 505, it is required to pass through several procedures, thereby wasting resources and causing overhead.

FIG. 14D is a diagram illustrating a system according to an embodiment of the present disclosure.

Referring to FIG. 14D, a system executed in the signal processing device 170 according to an embodiment of the present disclosure may repeatedly receive sensing data by using shared memory drivers SMDa and SMDb and call interfaces eRCa and eRCb on the hypervisor 505.

In this manner, by repeatedly receiving the sensing data using the mutual sharing area IVS for remote procedure call in the shared memory SMR, resources and overhead may be reduced.

Meanwhile, the first virtual machine VMB which is the server virtual machine 520 repeatedly receives the sensing data, and may transmit the sensing data to the second virtual machine VMA, which is the guest virtual machine 530, by using the mutual sharing area IVS. Accordingly, resources may be used efficiently between the plurality of virtual machines VMA and VMB. Particularly, a call and response delay time may be reduced during the Remote Procedure Call between the plurality of virtual machines VMA and VMB.

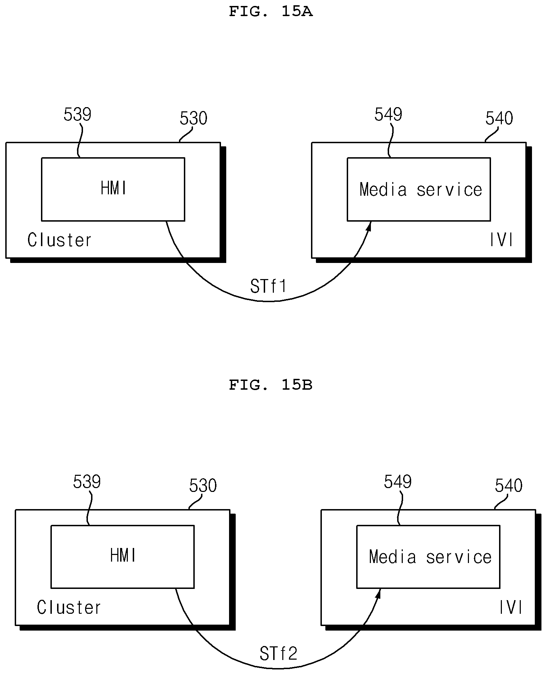

Meanwhile, the second virtual machine 530 operates for the first display 180a, and the processor 175 further executes a third virtual machine 540 for the second display 180b, and the second virtual machine 530 transmits a request for music playback information to the third virtual machine 530 via the second mutual sharing area IVS in the shared memory SMR and receive the music playback information written to the second mutual sharing area IVS to display the music playback information on the first display 180a. The music playback information will be described below with reference to FIGS. 15A to 15D.

FIGS. 15A to 15D are diagrams referred to in the description of the case where a cluster display transmits a request for music playback information to an AVN display.

FIG. 15A illustrates an example in which the second virtual machine 530 that operates for the first display 180a transmits a query as to whether to play music to the third virtual machine 540 that operates for the second display 180b.

For example, a human machine interface (HMI) in the second virtual machine 530 transmits, via the remote procedure call, a call as to whether to play music to a media service implemented in the third virtual machine 540 (STf1).

FIG. 15B is a diagram illustrating an example of transmitting a request for periodic update of playback information to the third virtual machine 540.

For example, a human machine interface HMI in the second virtual machine 530 transmits, via the remote procedure call, a call for periodic update of playback information to a media service implemented in the third virtual machine 540 (STf2).

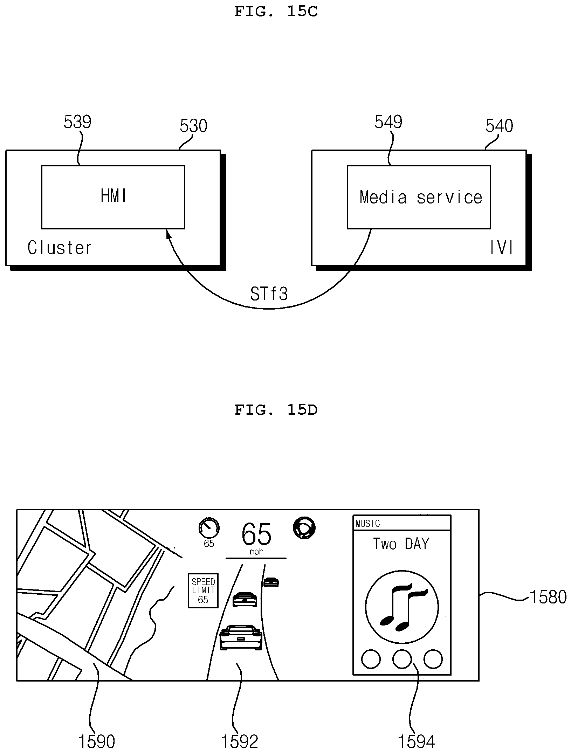

FIG. 15C is a diagram illustrating an example of periodic update of playback information from the third virtual machine 540 to the second virtual machine 530.

For example, a media service implemented in the third virtual machine 540 transmits, via the remote procedure call, a call for periodic update of playback information to the human machine interface HMI in the second virtual machine 530 (STf3).

FIG. 15D is a diagram illustrating an example of displaying a screen 1580, including music playback information 1594 in addition to map information 1590 and driving information 1592, on the first display 180a which is a cluster display.

Accordingly, resources may be used efficiently between the plurality of virtual machines 530 and 540. Particularly, resources may be used efficiently during transmission of music playback information between the plurality of virtual machines 530 and 540. Further, even when the number of virtual machines increases, rapid interaction between the virtual machines may be achieved.

Meanwhile, the second virtual machine VMA operates for the first display 180a, and the processor 175 further executes the third virtual machine for the second display 180b, and the second virtual machine VMA transmits a request for screen theme information to the third virtual machine via the second mutual sharing area IVS in the shared memory SMR, receives screen theme information written to the second mutual sharing area IVS, and display the screen theme information on the first display 180a.

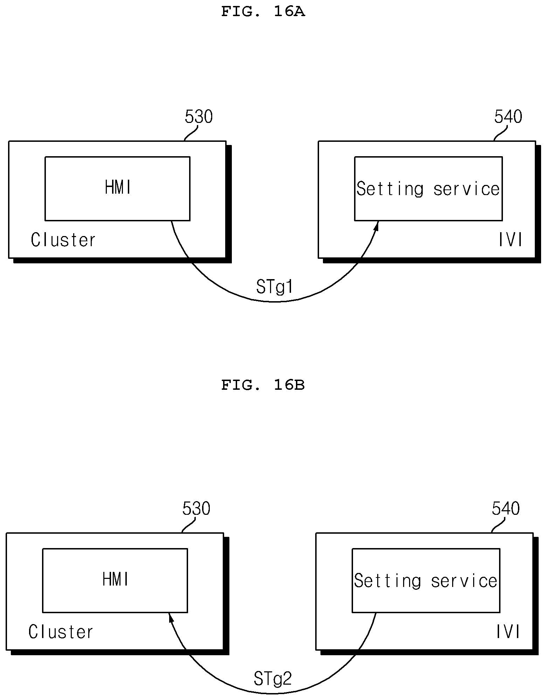

The screen theme information will be described below with reference to FIGS. 16A to 16D.

FIGS. 16A to 16D are diagrams referred to in the description of the case where a screen theme is set for the cluster display 180a and the AVN display 180b.

FIG. 16A illustrates an example in which the second virtual machine 530 that operates for the first display 180a transmits a request for screen theme information to the third virtual machine 540 that operates for the second display 180b.

For example, the human machine interface HMI in the second virtual machine 530 transmits, via the remote procedure call, a call related to screen theme information to a setting service implemented in the third virtual machine 540 (STg1).

FIG. 16B is a diagram illustrating an example in which the third virtual machine 540 notifies a change in screen theme information to the second virtual machine 530.

For example, the setting service implemented in the third virtual machine 540 transmits, via the remote procedure call, a call for changing a screen theme to the human machine interface HMI in the second virtual machine 530 (STg2).

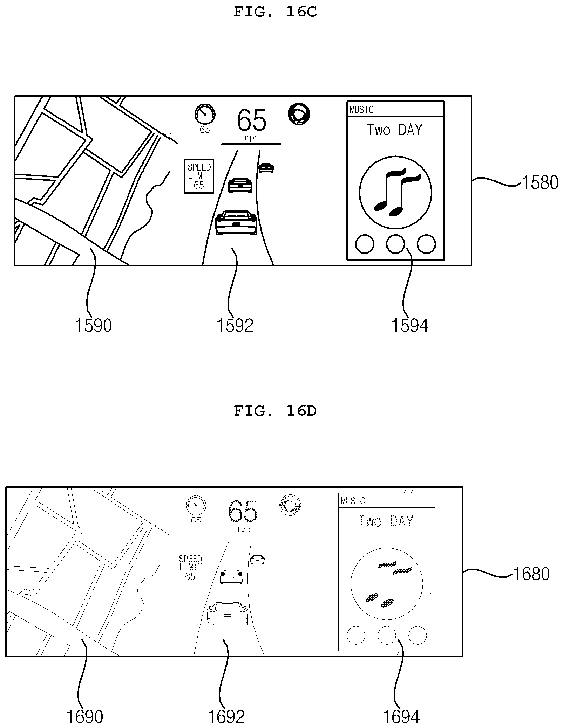

FIG. 16C is a diagram illustrating an example of displaying a screen 1580, including map information 1590, driving information 1592, and music playback information 1594, on the first display 180a which is the cluster display.

Particularly, an example is illustrated in which the screen 1580 is displayed in a first screen theme mode.

FIG. 16D is a diagram illustrating an example of displaying a screen 1680, including map information 1690, driving information 1692, and music playback information 1694, on the first display 180a which is the cluster display.

Particularly, an example is illustrated in which the screen 1680 is displayed in a second screen theme mode, which is different from the first screen theme mode, in response to a request for changing a screen theme from the third virtual machine 540.

Accordingly, resources may be used efficiently between the plurality of virtual machines 530 and 540. Particularly, resources may be used efficiently during transmission of screen theme information between the plurality of virtual machines 530 and 540.

While the present disclosure has been particularly shown and described with reference to preferred embodiments thereof, it will be understood by those skilled in the art that the present disclosure is not limited to those exemplary embodiments and various changes in form and details may be made therein without departing from the scope and spirit of the disclosure as defined by the appended claims, and such modifications should not be individually understood from the technical spirit or prospect of the present disclosure.

## Claims

1. A signal processing device comprising a processor configured to perform signal processing for a display located in a vehicle,
wherein the processor is configured to execute a plurality of virtual machines on a hypervisor in the processor, and a first virtual machine and a second virtual machine among the plurality of virtual machines share an mutual sharing area for a remote procedure call in a shared memory of the hypervisor,
wherein the first virtual machine is configured to execute a callee, which receives data in response to a caller of the second virtual machine, and a first call interface for access to the mutual sharing area, and
wherein the second virtual machine is configured to execute a caller for the remote procedure call and a second call interface for access to the mutual sharing area.

2. The signal processing device of claim 1, wherein the second virtual machine is configured to write call-related information to the mutual sharing area and notify the information to the first virtual machine,
wherein the first virtual machine is configured to receive data in the mutual sharing area.

3. The signal processing device of claim 2, wherein the first virtual machine is configured to write result data, processed based on the received data, to the mutual sharing area, and notify the result data to the second virtual machine,
wherein the second virtual machine is configured to receive the result data written to the mutual sharing area.

4. The signal processing device of claim 1, wherein the first virtual machine or the second virtual machine is configured to store data, having a size exceeding a capacity of the mutual sharing area, in a separate area of the shared memory.

5. The signal processing device of claim 1, wherein:
in response to parameter data transmitted from the caller, the second call interface is configured to copy the parameter data and meta data to the mutual sharing area; and
in response to a pointer parameter, the second call interface is configured to transmit data, corresponding to the pointer, to a call storage area in the shared memory.

6. The signal processing device of claim 1, wherein the first call interface or the second call interface is configured to generate or manage a control page in the shared memory or generate or manage the mutual sharing area.

7. The signal processing device of claim 1, wherein the first call interface or the second call interface is configured to generate or delete a remote procedure call channel including the mutual sharing area and the call storage area.

8. The signal processing device of claim 1, wherein the first call interface or the second call interface is configured to interact with a host driver external to the shared memory via a control page table and a control page in the shared memory, to generate or delete the remote procedure call channel including the mutual sharing area and the call storage area.

9. The signal processing device of claim 8, wherein the first call interface or the second call interface is configured to generate or delete the control page via the host driver.

10. The signal processing device of claim 8, wherein the first call interface or the second call interface is configured to generate control pages in a number corresponding to a number of providers of services related to the Remote Procedure Call.

11. The signal processing device of claim 7, wherein the first call interface or the second call interface is configured to generate remote procedure call channels in a number corresponding to the number of providers of services related to the Remote Procedure Call.

12. The signal processing device of claim 7, wherein the first call interface or the second call interface is configured to store data, having a size exceeding the mutual sharing area, in the call storage area, and write an address of the call storage area to the mutual sharing area.

13. The signal processing device of claim 7, wherein the first call interface or the second call interface is configured to store data, having a size exceeding the mutual sharing area, in the call storage area, and write an address of the call storage area to the mutual sharing area.

14. The signal processing device of claim 7, wherein in response to screen capture data, the first call interface is configured to store the screen capture data in the call storage area, and write an address of the call storage area to the mutual sharing area.

15. The signal processing device of claim 1, wherein the second virtual machine is configured to request the shared memory to generate a remote procedure call channel, including the mutual sharing area and the call storage area, in the shared memory, and receive information about the generated remote procedure call channel.

16. The signal processing device of claim 1, wherein the first virtual machine is configured to transmit data to the second virtual machine after booting by using the mutual sharing area.

17. The signal processing device of claim 1, wherein the first virtual machine is configured to repeatedly receive sensing data, and transmit the sensing data to the second virtual machine by using the mutual sharing area.

18. The signal processing device of claim 1, wherein:
the second virtual machine is configured to operate for a first display;
the processor is configured to further execute a third virtual machine for a second display; and
the second virtual processor is configured to transmit a request for music playback information to the third virtual machine by using a second mutual sharing area in the shared memory, receive music playback information written to the second mutual sharing area, and display the music playback information on the first display.

19. The signal processing device of claim 1, wherein:
the second virtual machine is configured to operate for a first display;
the processor is configured to further execute a third virtual machine for a second display; and
the second virtual processor is configured to transmit a request for screen theme information to the third virtual machine by using a second mutual sharing area in the shared memory, receive screen theme information written to the second mutual sharing area, and display the screen theme information on the first display.

20. A display apparatus for vehicle, the display apparatus comprising:
at least one display; and
a signal processing device comprising a processor configured to perform signal processing for the at least one display,
wherein the signal processing device comprises the signal processing device of any one of claims 1 to 19.
